# EUROPÄISCHE PATENTANMELDUNG

(11) **EP 4 759 115 A2**
(43) Veröffentlichungstag der Anmeldung: **17.06.2026**
(21) Anmeldenummer: 25222557.8
(22) Anmeldetag: 11.12.2025
(51) Int. Cl.: A01D 34/82, A01G 3/053, B01D 39/08, B27B 17/00

(54) **FILTERBAUTEIL FÜR EIN HANDGEFÜHRTES ARBEITSGERÄT**

(30) Priorität: 12.12.2024 DE 102024137500; 12.12.2024 DE 102024137498; 12.12.2024 DE 102024137501; 12.12.2024 DE 102024137499
(71) Anmelder: Andreas Stihl AG & Co. KG, 71336 Waiblingen (DE)
(72) Erfinder: Tessaro, Florian, 73776 Altbach (DE); Mandel, Roland, 70329 Stuttgart (DE); Failenschmid, Martin, 72829 Engstingen (DE); Pastor, Daniel, 71554 Weissach im Tal (DE); Stäbler, David, 73760 Ostfildern (DE); Wienand, Nicolas, 71554 Weissach im Tal (DE); Diehl, Heiko, 73732 Esslingen (DE); Böpple, Daniel, 70329 Stuttgart (DE); Martin, Daniel, 71364 Winnenden (DE); Hascher, Hans-Martin, 89150 Laichingen (DE); Strobel, Martin, 73666 Baltmannsweiler (DE); Grauf, Felix, 70771 Leinfelden-Echterdingen (DE)
(74) Vertreter: Karzel, Philipp

(57) **Zusammenfassung**

Die Erfindung betrifft ein handgeführtes Arbeitsgerät mit einem Filterbauteil (1) zur Filterung von Kühlluft. Das Filterbauteil (1) ist dazu vorgesehen, einen Teil einer Außenseite (3) des Arbeitsgeräts (2) zu bilden. Das Filterbauteil (1) weist dicke Fadenelemente (4) und dünne Fadenelemente (5) auf. Sowohl die dünnen Fadenelemente (5) als auch die dicken Fadenelemente (4) sind zur Filterung der Kühlluft von der Kühlluft zu passieren. Die dicken Fadenelemente (4) und die dünnen Fadenelemente (5) sind jeweils fadenförmig. Der Durchmesser (d1) der dicken Fadenelemente (4) ist größer als der Durchmesser (d2) der dünnen Fadenelemente (5). Die dicken Fadenelemente (4) dienen zur Abstützung der dünnen Fadenelemente (5).

## Beschreibung

Die Erfindung betrifft ein Filterbauteil zur Filterung von Kühlluft für ein handgeführtes Arbeitsgerät.

Ein derartiges außenliegendes Filterbauteil ist aus der EP 3 798 433 A1 bekannt.

Der vorliegenden Erfindung liegt die Aufgabe zugrunde ein Filterbauteil der gattungsgemäßen Art derart weiterzubilden, dass es gleichzeitig eine gute Filterwirkung und eine große mechanische Belastbarkeit gegenüber einer Krafteinwirkung von außen auf das Filterbauteil aufweist.

Diese Aufgabe wird durch ein Filterbauteil zur Filterung von Kühlluft für ein handgeführtes Arbeitsgerät, wobei das Filterbauteil dazu vorgesehen ist, einen Teil einer Außenseite des Arbeitsgeräts zu bilden, wobei das Filterbauteil dicke Fadenelemente und dünne Fadenelemente aufweist, wobei sowohl die dünnen Fadenelemente als auch die dicken Fadenelemente zur Filterung der Kühlluft von der Kühlluft zu passieren sind, wobei die dicken Fadenelemente und die dünnen Fadenelemente jeweils fadenförmig sind, wobei der Durchmesser der dicken Fadenelemente größer als der Durchmesser der dünnen Fadenelemente ist, und wobei die dicken Fadenelemente zur Abstützung der dünnen Fadenelemente dienen, gelöst.

Eine weitere Aufgabe der Erfindung liegt darin, ein gattungsgemäßes handgeführtes Arbeitsgerät mit einem Filterbauteil derart weiterzubilden, dass gleichzeitig eine gute Filterwirkung und eine große mechanische Belastbarkeit gegenüber einer Krafteinwirkung von außen auf das Filterbauteil ermöglicht ist.

Diese Aufgabe wird durch ein handgeführtes Arbeitsgerät mit einem Filterbauteil, wobei das Filterbauteil dazu vorgesehen ist, einen Teil einer Außenseite des Arbeitsgeräts zu bilden, wobei das Filterbauteil dicke Fadenelemente und dünne Fadenelemente aufweist, wobei sowohl die dünnen Fadenelemente als auch die dicken Fadenelemente zur Filterung der Kühlluft von der Kühlluft zu passieren sind, wobei die dicken Fadenelemente und die dünnen Fadenelemente jeweils fadenförmig sind, wobei der Durchmesser der dicken Fadenelemente größer als der Durchmesser der dünnen Fadenelemente ist, wobei die dicken Fadenelemente zur Abstützung der dünnen Fadenelemente dienen, wobei das Filterbauteil einen Teil einer Außenseite des Arbeitsgeräts bildet, und wobei durch das Filterbauteil Kühlluft in einer Durchströmungsrichtung von außen in einen Innenbereich des Arbeitsgeräts strömen kann, gelöst.

Der Erfindung liegt die Erkenntnis zugrunde, dass eine gute Filterwirkung durch eine feine Filterstruktur aus feineren Bauelementen mit geringerer Festigkeit und eine große mechanische Belastbarkeit durch eine grobe Filterstruktur mit Bauelementen größerer Festigkeit erreicht wird. Beide Vorteile zugleich können erreicht werden, indem das erfindungsgemäße Filterbauteil dicke Fadenelemente und dünne Fadenelemente aufweist. Sowohl die dünnen Fadenelemente als auch die dicken Fadenelemente sind zur Filterung der Kühlluft von der Kühlluft zu passieren. Die dicken Fadenelemente und die dünnen Fadenelemente sind jeweils fadenförmig. Der Durchmesser der dicken Fadenelemente ist größer als der Durchmesser der dünnen Fadenelemente. Die dicken Fadenelemente dienen zur Abstützung der dünnen Fadenelemente.

Durch die dünnen Fadenelemente kann eine sehr gute Filterwirkung erreicht werden. Die Maschenweite des Filterbauteils kann aufgrund der dünnen Fadenelement klein sein. Gleichzeitig stützen die dicken Fadenelemente die dünnen Fadenelemente ab und sorgen so für eine große mechanische Belastbarkeit des Filterbauteils.

Fadenelemente sind insbesondere längliche, fadenförmige Bauelemente. Insbesondere erstreckt sich ein Fadenelement entlang einer Längsrichtung. Die Längsrichtung muss nicht geradlinig verlaufen, sondern kann auch einer Kurvenform folgen. Querschnitte durch ein Fadenelemente in Richtung senkrecht zur Längsrichtung besitzen einen Durchmesser, der der größten Ausdehnung des Querschnitts entspricht. Insbesondere sind die Querschnitte im Wesentlichen kreisförmig.

Insbesondere kann vorgesehen sein, dass die dicken Fadenelemente für sich genommen zu einem Stützgewebe verwoben, insbesondere verwirkt, sind und die dünnen Fadenelemente für sich genommen zu einem Filtergewebe verwoben, insbesondere verwirkt, sind. In diesem Fall umfasst das Filterbauteil zwei Lagen. Die dicken Fadenelemente bilden eine erste Lage, nämlich das Stützgewebe, und die dünnen Fadenelemente bilden eine zweite Lage, nämlich das Filtergewebe. Insbesondere ist das Stützgewebe ein Gewebe. Gewebe entstehen durch das Verweben von zwei sich kreuzenden Fadensystemen: Kett- und Schussfäden. Es kann aber auch vorgesehen sein, dass das Stützgewebe ein Gewirke ist. Gewirke werden durch Maschenbildung auf einer Wirkmaschine hergestellt. Dabei werden Fadenschlingen ineinandergeschlungen, um eine Fläche zu erzeugen. Insbesondere ist das Filtergewebe ein Gewebe. Es kann aber auch vorgesehen sein, dass das Filtergewebe ein Gewirke ist. Insbesondere bilden die dicken Fadenelement für sich genommen ein Gewebe, insbesondere ein Gewirke. Insbesondere bilden die dünnen Fadenelemente für sich genommen ein Gewebe, insbesondere ein Gewirke. Alternativ kann vorgesehen sein, dass die dicken Fadenelemente und die dünnen Fadenelemente gemeinsam zu einem einzigen Stützfiltergewebe verwoben, insbesondere verwirkt, sind. Insbesondere ist das Stützfiltergewebe ein Gewebe. Es kann aber auch vorgesehen sein, dass das Stützfiltergewebe ein Gewirke ist. Insbesondere umfasst das Stützfiltergewebe eine einzige Lage, die gemeinsam aus dicken Fadenelementen und dünnen Fadenelementen gebildet ist. Dadurch ist die Abstützwirkung der dünnen Fadenelemente an den dicken Fadenelemente besonders verlässlich erzielbar.

Das Filtergewebe besitzt eine vergleichsweise geringe Höhe. Insbesondere bilden die dicken Fadenelemente und die dünnen Fadenelemente gemeinsam ein Gewirke.

Insbesondere stützt sich das Filtergewebe, insbesondere im Betrieb des Filterbauteils, unmittelbar an dem Stützgewebe ab. Insbesondere liegen das Filtergewebe und das Stützgewebe unmittelbar aneinander an. Insbesondere kontaktiert das Filtergewebe das Stützgewebe, insbesondere im Betrieb. Im Betrieb ist das Filterbauteil, wenn ein Luftstrom durch das Filtergewebe und das Stützgewebe, bzw. durch das Stützfiltergewebe, strömt. Das Filterbauteil ist insbesondere in Betrieb, wenn es in Durchströmungsrichtung von Kühlluft durchströmt wird. Das Filterbauteil ist insbesondere in Betrieb, wenn durch das Filterbauteil Kühlluft in Durchströmungsrichtung angesaugt wird.

Insbesondere weisen die dicken Fadenelemente eine größere Steifigkeit auf als die dünnen Fadenelemente. Insbesondere sind die dicken Fadenelemente gegenüber einer auf sie einwirkenden Kraft steifer und schwerer verformbar als die dünnen Fadenelemente.

Insbesondere ist das Stützgewebe zur Anordnung im Arbeitsgerät so vorgesehen, dass es einen Teil der Außenseite des Arbeitsgeräts bildet. Dadurch kann das Stützgewebe von außen auf das Filterbauteil einwirkende Kräfte aufnehmen und so das Filtergewebe vor Verformung oder Beschädigung schützen. Insbesondere ist das Filtergewebe einem Innenbereich des Arbeitsgeräts zugewandt.

Insbesondere ist in alternativer Ausführung das Filtergewebe zur Anordnung im Arbeitsgerät so vorgesehen, dass es einen Teil der Außenseite des Arbeitsgeräts bildet. Insbesondere ist das Filtergewebe so im Arbeitsgerät angeordnet, dass es einen Teil der Außenseite bildet. Insbesondere ist das Stützgewebe einem Innenbereich des Arbeitsgeräts zugewandt. Bei einer Anordnung des Filtergewebes so, dass das Filtergewebe einen Teil der Außenseite des Arbeitsgeräts bildet, ergibt sich daraus, dass das Filtergewebe insbesondere glatter ist als das Stützgewebe, der Vorteil, dass auch die Außenseite dann glatter ist als bei umgekehrter Anordnung. Schmutz und gefilterte Partikel dringen dann in vermindertem Maß zum Stützgewebe vor und können sich nicht im selben Maß festsetzen. Durch Vibrationen im Betrieb des Arbeitsgeräts und Erschütterungen können Schmutz und Partikel sich teilweise oder ganz wieder vom Filtergewebe lösen und abfallen. Auch die Reinigung des Filterbauteils von außen, beispielsweise mit einem Besen ist dadurch erleichtert.

In besondere Weiterbildung der Erfindung umfasst das Filterbauteil ein weiteres Stützgewebe. Insbesondere ist das weitere Stützgewebe aus weiteren dicken Fadenelementen gewoben. Insbesondere bilden die weiteren dicken Fadenelemente des weiteren Stützgewebes für sich genommen ein Gewirke. Insbesondere ist das weitere Stützgewebe unabhängig vom Stützgewebe ausgebildet. Insbesondere ist das Filtergewebe zwischen dem Stützgewebe und dem weiteren Stützgewebe angeordnet. Dadurch ist das Filtergewebe verlässlich vor Verformung und Beschädigung geschützt. Insbesondere umfasst das Filterbauteil drei Lagen.

Insbesondere sind die dicken Fadenelemente und die dünnen Fadenelemente mittels einer Leinwandbindung miteinander verwoben. Bei einer Leinwandbindung liegt abwechselnd jeder Kettfaden (Kette) über und unter einem Schussfaden (Schuss) und jeder Schussfaden abwechselnd über und unter einem Kettfaden. Insbesondere sind die dicken Fadenelemente des Stützgewebes in Leinwandbindung miteinander verwoben. Insbesondere sind die dünnen Fadenelemente des Filtergewebes in Leinwandbindung miteinander verwoben. Es kann auch vorgesehen sein, dass die dicken Fadenelement und die dünnen Fadenelemente des Stützfiltergewebes miteinander in Leinwandbindung verwoben sind. Insbesondere sind die dicken Fadenelemente Kettfäden des Stützfiltergewebes und die dünnen Fadenelemente sind Schussfäden des Stützfiltergewebes. Dadurch kann eine kleine Maschenweite, insbesondere in der Richtung, in der die dünnen Fadenelemente verlaufen, erreicht werden. Dies ergibt eine gute Filterwirkung. Die Leinwandbindung wird auch als glatte Bindung bezeichnet. Die Leinwandbindung wird auch als Leinenbindung bezeichnet.

Insbesondere sind die dicken Fadenelemente des Stützgewebes für sich genommen mittels eine Köperbindung miteinander verwoben. Insbesondere sind die dünnen Fadenelemente des Filtergewebes für sich genommen mittels eine Köperbindung miteinander verwoben. Es kann auch vorgesehen sein, dass die dicken Fadenelemente und die dünnen Fadenelemente des Stützfiltergewebes miteinander in Köperbindung verwoben sind. Die Köperbindung zeichnet sich durch ein charakteristisches Diagonalmuster aus, das durch die spezifische Anordnung der Kett- und Schussfäden entsteht. Bei der Köperbindung wird der Schussfaden über einen Kettfaden geführt, dann unter mindestens zwei Kettfäden hindurch, dann wieder über einen Kettfaden hinweg und so fort. Dieser Rhythmus wird in der nächsten Reihe um einen Kettfaden versetzt fortgesetzt. Die Versetzung erfolgt immer in derselben Richtung. Dies führt zu einer Oberflächenstruktur mit diagonalen Rillen, die als Grate bezeichnet werden.

Insbesondere sind die dicken Fadenelemente und die dünnen Fadenelemente des Stützfiltergewebes zu einem Tressengewebe verwoben. Insbesondere verlaufen die dicken Fadenelemente über ihre gesamte Längserstreckung geradlinig, insbesondere in eine einzige Richtung. Insbesondere sind die dicken Fadenelemente in den Kreuzungsbereichen mit den dünnen Fadenelementen nicht aufgrund der dünnen Fadenelemente gebogen.

Es kann vorgesehen sein, dass es sich bei dem Tressengewebe um eine "glatte Tresse" handelt. Bei der sogenannten glatten Tresse werden die Schussfäden beim Weben in Leinwandbindung eng an das Gewebe angeschlagen. Die Kettfäden liegen in einem weiteren Abstand voneinander und sind dicker als die Schussfäden. Durch den starken Anschlag beim Weben verformen sich die Schussfäden an ihren Kreuzungsstellen leicht, so dass diese an den Kontaktpunkten leicht abgeflacht werden.

Aufgrund der dicken Fadenelemente des Tressengewebes weist das Tressengewebe eine sehr hohe mechanische Stabilität und Belastbarkeit auf und zeigt gleichzeitig eine sehr gute Filterwirkung.

Durch Variation der Fadenstärken und des Fadenabstands der Kettfäden können die Filtrationseigenschaften der glatten Tresse variiert werden.

Es kann auch vorgesehen sein, dass es sich bei dem Tressengewebe um eine "Panzertresse" handelt. Bei dieser Webart sind die Kettfäden dünn und dicht nebeneinander angeordnet. Die dicken Schussfäden werden dicht aneinander geschlagen. Die Öffnungen verlaufen daher schräg zur Gewebeoberfläche. Durch die Gestaltung als Panzertresse ist das Stützfiltergewebe mechanisch sehr stabil und reißfest. Bei der Gestaltung als Panzertresse sind die Kettfäden insbesondere die dünnen Fadenelemente und die Schussfäden sind insbesondere die dicken Fadenelemente.

Insbesondere ist eine Stützmaschenweite des Stützgewebes größer als eine Filtermaschenweite des Filtergewebes. Dadurch kann mittels des Filtergewebes eine gute Filterwirkung erzielt werden. Gleichzeitig kann das Filtergewebe mittels des Stützgewebes vor Verformung und/oder Beschädigung geschützt werden. Das Stützgewebe kann grobe Partikel filtern, insbesondere vorfiltern, während das Filtergewebe, feine Partikel mit einem kleineren Durchmesser als dem der groben Partikel filtern kann.

Das Filterbauteil besitzt insbesondere einen Rahmen. Der Rahmen begrenzt eine Baueinheit aus Filtergewebe und Stützgewebe bezüglich einer Durchströmungsrichtung der Kühlluft von beiden Seiten her. Dadurch ist die Baueinheit aus Filtergewebe und Stützgewebe vom Rahmen zusammengehalten. Insbesondere ist der Rahmen mittels Spritzgießen um das Filtergewebe und das Stützgewebe gespritzt. Selbstverständlich gilt dies nur für einen Teilbereich der Flächen des Filtergewebes und des Stützgewebes. Auch bei einer Gestaltung des Filterbauteils mit einem Stützfiltergewebe kann vorgesehen sein, dass das Stützfiltergewebe von dem Rahmen eingefasst ist. Der Rahmen begrenzt das Stützfiltergewebe bezüglich der Durchströmungsrichtung der Kühlluft von beiden Seiten her. Insbesondere ist der Rahmen mittels Spritzgießen um das Stützfiltergewebe gespritzt.

Insbesondere sind die dicken Fadenelemente und/oder die dünnen Fadenelemente aus Metall, insbesondere aus nichtrostendem Metall, insbesondere aus Edelstahl. Dadurch ergibt sich eine hohe mechanische Stabilität des Filtergewebes und/oder des Stützgewebes, bzw. des Stützfiltergewebes.

Es kann aber auch vorgesehen sein, dass die dicken Fadenelemente und/oder die dünnen Fadenelemente aus Kunststoff sind. Dies gilt sowohl für Gestaltungen des Filterbauteils mit Stützgewebe und mit Filtergewebes als auch mit Stützfiltergewebe. Dadurch kann das Filterbauteil auf einfache und kostengünstige Weise hergestellt werden.

Es kann auch vorgesehen sein, dass die dicken Fadenelemente aus Metall, insbesondere aus nichtrostendem Metall, insbesondere aus Edelstahl, und die dünnen Fadenelemente aus Kunststoff sind oder umgekehrt. Dies gilt sowohl für Gestaltungen des Filterbauteils mit Stützgewebe und mit Filtergewebes als auch mit Stützfiltergewebe. Dadurch kann das Filterbauteil stabil und gleichzeitig einfach und kostengünstig hergestellt werden.

Insbesondere weist das Filterbauteil mindestens zwei Verbindungsrippen auf. Die Verbindungsrippen sind auf den dünnen Fadenelementen und/oder den dicken Fadenelementen angeordnet. Insbesondere sind die Verbindungsrippen zur Anordnung auf der Außenseite des Arbeitsgeräts vorgesehen. Insbesondere verstärken die mindestens zwei Verbindungsrippen den Rahmen. Insbesondere verbinden die mindestens zwei Verbindungsrippen jeweils zwei sich gegenüberliegende Stellen eines Umfangsrahmens des Rahmens miteinander.

Das Filterbauteil besitzt eine senkrecht zur Durchströmungsrichtung gemessene größte Ausdehnung. Die mindestens zwei Verbindungsrippen verlaufen in einem Bereich, der sich über mindestens 30% der größten Ausdehnung erstreckt, insbesondere kreuzungsfrei, insbesondere im Wesentlichen parallel zueinander. Dies erleichtert ein Reinigen des Filterbauteils. Insbesondere ist in diesem Bereich der Raum zwischen den mindestens zwei Verbindungsrippen frei von quer zu den mindestens zwei Verbindungsrippen verlaufenden Querrippen. In Verlaufsrichtung der mindestens zwei Verbindungsrippen kann das Filterbauteil dadurch in diesem Bereich ungestört durch Querrippen mit einem Besen überstrichen werden.

Insbesondere schließen die mindestens zwei Verbindungsrippen zumindest einen Teil der dicken Fadenelemente und einen Teil der dünnen Fadenelemente bezüglich der Durchströmungsrichtung der Kühlluft von beiden Seiten ein. Dadurch sind die dünnen Fadenelemente und die dicken Fadenelemente, insbesondere das Stützgewebe und das Filtergewebe, verlässlich miteinander verbunden.

Bei einem erfindungsgemäßen handgeführten Arbeitsgerät mit einem Filterbauteil in einer der vorstehend beschriebenen Varianten kann vorgesehen sein, dass das Filterbauteil einen Teil einer Außenseite des Arbeitsgeräts bildet. Insbesondere kann durch das Filterbauteil Kühlluft in einer Durchströmungsrichtung von außen in einen Innenbereich des Arbeitsgeräts strömen. Dadurch kann die Kühlluft gefiltert werden. Gleichzeitig ist das Filterbauteil mechanisch stabil.

Insbesondere umfasst das Arbeitsgerät ein Werkzeug mit einer Längsmittelachse. Insbesondere ist die Längsmittelachse des Werkzeugs in einer Ansicht in Durchströmungsrichtung der Kühlluft blickend zwischen den mindestens zwei Verbindungsrippen angeordnet. Dadurch kann das Filterbauteil, insbesondere die mindestens zwei Verbindungsrippen als Peilhilfe für den Einsatz des Werkzeugs dienen. Wenn beispielsweise das Werkzeug von einem Werkstück verdeckt ist, geben die mindestens zwei Verbindungsrippen, bzw. deren Verlauf, eine Information über die Lage der Längsachse der Führungsschiene für das Werkzeug.

In besonderer Weiterbildung der Erfindung ist das Filterbauteil durch ein einziges, insbesondere zentrales, Befestigungselement an einem Grundkörper des Arbeitsgeräts befestigbar. Dies ermöglicht eine einfache und schnelle Befestigung des Filterbauteils. Ebenfalls ist dadurch ein schneller Austausch und/oder eine unkomplizierte Reinigung des Filterbauteils möglich.

Die Erfindung betrifft ferner ein Filterbauteil zur Filterung von Kühlluft für ein handgeführtes Arbeitsgerät, wobei das Filterbauteil einen Rahmen und ein Gewebe umfasst, wobei das Filterbauteil zur Durchströmung mit Kühlluft in einer Durchströmungsrichtung vorgesehen ist, wobei der Rahmen das Gewebe bezüglich der Durchströmungsrichtung von beiden Seiten her einfasst und um die Durchströmungsrichtung geschlossen umläuft, wobei das Gewebe eine das Gewebe in Durchströmungsrichtung vollständig durchdringende Durchgangsöffnung zur Durchführung eines Stifts während der Herstellung des Filtebauteils besitzt, wobei das Filterbauteil eine Blockierung umfasst, und wobei eine Durchströmung des Filterbauteils mit Kühlluft in Durchströmungsrichtung im Bereich der Durchgangsöffnung durch die Blockierung verhindert ist.

Eine Durchströmung des Filterbauteils mit Kühlluft in Durchströmungsrichtung im Bereich der Durchgangsöffnung zur Durchführung eines Stifts während der Herstellung des Filtebauteils ist durch die Blockierung verhindert. Dadurch ist verhindert, dass aufgrund der Durchgangsöffnung, die während der Herstellung des Filterbauteils zur Durchführung des Stifts genutzt wird, ein Loch im Gewebe verbleibt, das die Filterwirkung negativ beeinträchtigt. Dadurch erzielt das Filterbauteil eine gute Filterwirkung.

Insbesondere ist die Durchgangsöffnung, insbesondere ein Rand der Durchgangsöffnung, von Material des Rahmens umgeben. Durch dieses, am Rand der Durchgangsöffnung befindliche Material des Rahmens ist auf einfache Weise eine Stützstruktur geschaffen, an der die Blockierung angeordnet werden kann. Die Blockierung kann sich an diesem, am Rand der Durchgangsöffnung befindlichen Material des Rahmens abstüzen.

Insbesondere umfasst der Rahmen eine Umfangsrahmen und mindestens eine Verbindungsstruktur. Der Umfangsrahmen läuft um einen Rand des Gewebes, insbesondere geschlossen, umläuft. Die Verbindungsstruktur verbindet zwei gegenüberliegende Stellen des Umfangsrahmens miteinander. Dadurch ist das Filterbauteil, insbesondere der Rahmen, stabiler, insbesondere steifer. Die Durchgangsöffnung ist insbesondere im Bereich der Verbindungsstruktur, insbesondere in einem Abstand zum Umfangsrahmen angeordnet. Dadurch kann das Gewebe während des Gussverfahrensschritts zur Herstellung des Rahmens nahe am Schwerpunkt des Gewebes oder sogar im Schwerpunkt des Gewebes durch den Stift positioniert sein. Dies ermöglicht eine verlässliche Positionierung des Gewebes mit einer möglichst geringen Anzahl an Stiften, insbesondere mit nur einem einzigen Stift. Es kann auch vorgesehen sein, dass das Gewebe während des Gussverfahrensschritts mit zwei oder mehr Stiften gehalten wird. Insbesondere geschieht dies mittels der weiteren Stifte analog zu der für den mindestens einen Stift beschriebenen Weise.

Insbesondere ist die Durchgangsöffnung von der Verbindungsstruktur überdeckt. Insbesondere ist die Blockierung von der Verbindungsstruktur gebildet. Dadurch kann die Blockierung auf einfache Weise während der Herstellung des Rahmens, insbesondere während des Gussverfahrensschritts, hergestellt werden. Dadurch kann das Material des Rahmens zur Herstellung der Blockierung genutzt werden. Dies ist material- und kostensparend.

Insbesondere ist die Blockierung ein Überdeckungsabschnitt, der die Durchgangsöffnung überdeckt, insbesondere vollständig überdeckt. Insbesondere ist der Überdeckungsabschnitt oberhalb der Durchgangsöffnung angeordnet. Insbesondere überdeckt der Überdeckungsabschnitt die Durchgangsöffnung in Ansicht in Durchströmungsrichtung, insbesondere vollständig. Insbesondere ist der Überdeckungsabschnitt Bestandteil der Verbindungsstruktur, insbesondere des Rahmens.

Der Rahmen weist im Bereich um die Durchgangsöffnung herum eine in Durchströmungsrichtung gemessene Rahmenstärke auf. Der Überdeckungsabschnitt weist eine in Durchströmungsrichtung gemessene Überdeckungsstärke auf.

Insbesondere beträgt die Überdeckungsstärke höchstens 50%, insbesondere höchstens 20%, insbesondere höchstens 5% der Rahmenstärke beträgt. Dadurch kann die Blockierung, insbesondere der Überdeckungsabschnitt, materialsparend hergestellt sein.

Insbesondere beträgt die Überdeckungsstärke mindestens 1%, der Rahmenstärke. Dadurch ist die Blockierung, insbesondere der Überdeckungsabschnitt, dick genug, um die Durchströmung der Durchgangsöffnung mit Kühlluft zu verhindern.

Insbesondere beträgt die Überdeckungsstärke von 0,01 mm bis 5 mm, insbesondere von 0,05 mm bis 2 mm.

Insbesondere ist die Blockierung von Material des Rahmens gebildet.

Insbesondere deckt die Blockierung die Durchgangsöffnung haubenförmig ab. Dadurch ist die Blockierung zugleich materialsparend und stabil hergestellt. Insbesondere kann die Blockierung dadurch während des Gussverfahrensschritts auf einfache Weise hergestellt werden.

Die Erfindung betrifft ferner ein Verfahren zur Herstellung eines Filterbauteils zur Filterung von Kühlluft für ein handgeführtes Arbeitsgerät. Es ist vorgesehen, dass das Filterbauteil einen Rahmen und ein Gewebe umfasst, wobei das Filterbauteil zur Durchströmung mit Kühlluft in einer Durchströmungsrichtung vorgesehen ist, wobei der Rahmen das Gewebe einfasst, dass bei der Herstellung des Filterbauteils das Gewebe in einem Gussverfahrensschritt zwischen einer ersten Werkzeughälfte und einer zweiten Werkzeughälfte so umgossen wird, dass hierbei der Rahmen entsteht, wobei das Gewebe eine Durchgangsöffnung besitzt, dass mindestens ein Stift während des Gussverfahrensschritts durch die Durchgangsöffnung geführt wird, um das Gewebe in Position zu halten, dass eine Durchströmung des Filterbauteils mit Kühlluft in Durchströmungsrichtung im Bereich der Durchgangsöffnung durch Vorsehen einer Blockierung verhindert wird, und insbesondere dass die Blockierung durch den Rahmen gebildet ist.

Durch dieses Verfahren ist ein Filterbauteil mit guter Filterwirkung auf einfache Weise herstellbar.

Insbesondere wird die Blockierung während des Gussverfahrensschritts gebildet. Insbesondere dringt während des Gussverfahrensschritts Material zur Herstellung des Rahmens in den Bereich zwischen den Stift und das Gusswerkzeug vor. Es kann vorgesehen sein, dass zwischen dem Stift und dem Gusswerkzeug immer ein Raum vorhanden ist, in den das Material während des Gussverfahrensschritts vordringen kann. Es kann aber auch vorgesehen sein, dass der Stift zu Beginn des Gussverfahrensschritts an einer zweiten Werkzeughälfte des Gusswerkzeugs anliegt und dass während des Gussverfahrensschritts ein Raum zwischen dem Stift und der zweiten Werkzeughälfte entsteht.

Insbesondere ist der Stift in Richtung auf die zweite Werkzeughälfte vorgespannt, insbesondere mittels einer Feder. Die Spannkraft der Vorspannung und der Druck, mit dem das Material während des Gussverfahrensschritts eingebracht wird, sind so aufeinander abgestimmt, dass der Stift während des Gussverfahrensschritts entgegen der Richtung der Spannkraft durch das Material von der zweiten Werkzeughälfte entfernt wird. Hierbei entsteht ein Raum zwischen der zweiten Werkzeughälfte und dem Stift, in den das Material vordringt. Hierbei wird die Blockierung, insbesondere der Überdeckungsabschnitt ausgebildet. Die Durchgangsöffnung des Gewebes wird hierbei insbesondere nicht von Material ausgefüllt.

Alternativ zur durch einen Überdeckungsabschnitt ausgebildeten Blockierung kann vorgesehen sein, dass die Blockierung durch ein Verschlusselement ausgebildet ist. Insbesondere ist die Durchgangsöffnung mit der Blockierung, insbesondere dem Verschlusselement verschlossen. Insbesondere ist das Verschlusselement ein Stopfen in der Durchgangsöffnung. Insbesondere ist das Verschlusselement aus Elastomer, insbesondere aus thermoplastischem Elastomer.

Insbesondere entsteht bei einem zugehörigen Verfahren während des Gussverfahrensschritts am Ort des Stifts in dem Rahmen eine den Rahmen in Richtung von einer ersten Werkzeughälfte des Gusswerkzeugs zu der zweiten Werkzeughälfte vollständig durchdringende Halteöffnung. Insbesondere entsteht der Rahmen zeitgleich mit der Halteöffnung um die Halteöffnung herum. Insbesondere durchdringt der Stift, der das Gewebe während des Gussverfahrensschritts in Position hält, das Gewebe an einer Stelle, die während des Gussverfahrensschritts so umspritzt wird, dass an dieser Stelle, bzw. um diese Stelle herum, der Rahmen entsteht. Insbesondere wird die Halteöffnung in einem nachfolgenden Dichtungsverfahrensschritt mit dem Verschlusselement verschlossen.

Dadurch ist vermieden, dass im fertig hergestellten Filterbauteil in dem Gewebe ein durch den Stift verursachtes Loch verbleibt. Vielmehr entsteht dieses Loch im Bereich des Rahmens als Durchgangsöffnung und wird nachfolgend durch das Verschlusselement geschlossen, insbesondere ausgefüllt. Dadurch ergeben sich weder optische noch funktionale Nachteile und gleichzeitig ist das Filterbauteil, insbesondere das Gewebe, während des Gussverfahrensschritts positioniert.

Insbesondere ist der Stift während des Gussverfahrensschritts durch die Durchgangsöffnung hindurchgeführt. Insbesondere ist das Gewebe während des Gussverfahrensschritts unverlierbar mit der Durchgangsöffnung auf dem Stift aufgefädelt. Dadurch ist sichergestellt, dass das Gewebe unverlierbar zwischen den beiden Werkzeughälften positioniert ist. Insbesondere kontaktiert der Stift während des Gussverfahrensschritts sowohl die erste Werkzeughälfte als auch die zweite Werkzeughälfte. Dadurch ist das Gewebe auf dem Stift unverlierbar aufgefädelt. Es kann aber auch vorgesehen sein, dass der Stift lediglich in die andere Werkzeughälfte derart vorragt, dass die andere Werkzeughälfte ein Abziehen des auf dem Stift aufgefädelten Gewebes von dem Stift verhindert.

Insbesondere ist das Gewebe biegesteift. Dadurch kann das Gewebe auf dem Stift aufgefädelt werden und zwischen den beiden Werkzeughälften verlässlich positioniert werden.

Insbesondere wird der Rahmen im Gussverfahrensschritt mittels eines Spritzgussverfahrens, insbesondere mittels eines Kunststoffspritzgussverfahrens, hergestellt. Dies ermöglicht eine einfache Herstellung des Rahmens und des Filterbauteils.

Insbesondere wird das Verschlusselement gegossen, während sich das Filterbauteil zwischen der ersten Werkzeughälfte und der zweiten Werkzeughälfte befindet. Insbesondere befindet sich das Filterbauteil zwischen dem Gussverfahrensschritt und dem Dichtungsverfahrensschritt ununterbrochen zwischen der ersten Werkzeughälfte und der zweiten Werkzeughälfte. Dadurch ist eine kostengünstige und schnelle Herstellung des Filterbauteils möglich.

Insbesondere weist das Filterbauteil ein Dichtelement zur Anlage an einem Grundkörper des handgeführten Arbeitsgeräts und zur Abdichtung zwischen dem Rahmen und dem Grundkörper auf. In besonderer Weiterbildung der Erfindung wird das Dichtelement im Dichtungsverfahrensschritt hergestellt. Dadurch können in ein und demselben Verfahrensschritt, nämlich in dem Dichtungsverfahrensschritt, sowohl das Verschlusselement als auch das Dichtelement hergestellt werden. Dies spart Zeit und Kosten.

Insbesondere werden das Dichtelement und das Verschlusselement in einem einzigen Gussschritt gegossen. Insbesondere sind das Dichtelement und das Verschlusselement materialeinheitlich, insbesondere monolithisch ausgebildet.

Insbesondere dient die Halteöffnung während des Eingießens des Materials zur Herstellung des Dichtelements zur Entlüftung von durch das Material verdrängter Luft. Dadurch kann das Dichtelement schnell und einfach hergestellt werden. Aufgrund der Entlüftung durch die Halteöffnung kann die von dem Material des Dichtelements verdrängte Luft einfach und schnell entweichen. Das Dichtelement kann dadurch mit gleichmäßiger Konsistenz, insbesondere blasenfrei hergestellt werden.

Insbesondere besitzt der Rahmen einen Kanal zur Aufnahme des Dichtelements. Der Kanal verläuft insbesondere am Rand des Rahmens. Die Halteöffnung ist insbesondere in einem Abstand zum Rand des Rahmens angeordnet. Insbesondere sind der Kanal und die Halteöffnung über einen Verbindungskanal des Rahmens miteinander verbunden. Auf diese Weise kann während des Dichtungsverfahrensschritts das Dichtelement in dem Kanal am Rand des Rahmens hergestellt werden. Gleichzeitig kann das Material zur Herstellung des Dichtelements auch weiter in den Verbindungskanal und zu der Halteöffnung fließen. Hierbei kann in der Halteöffnung das Verschlusselement hergestellt werden. Durch die Gestaltung des Rahmens mit einem Kanal und Verbindungskanal zu der Halteöffnung ist die Herstellung sowohl von Dichtelement als auch von Verschlusselement in einem einzigen Dichtungsverfahrensschritt auf einfache Weise möglich.

Insbesondere besitzt der Rahmen eine Angussöffnung zum Eingießen des Materials zur Herstellung des Dichtelements. Durch die Angussöffnung gelangt das Material zur Herstellung des Dichtelements während des Dichtungsverfahrensschritts in den Kanal. Insbesondere gelangt das Material zur Herstellung des Dichtelements während des Dichtungsverfahrensschritts von dem Kanal in den Verbindungskanal und zu der Halteöffnung. Das Material zur Herstellung des Dichtelements wird auf diese Weise auch zur Herstellung des Verschlusselements verwendet.

Insbesondere wird das Gewebe vor dem Gussverfahrensschritt mit seiner Durchgangsöffnung auf dem Stift eingefädelt und liegt dann auf einer Auflagefläche eines Auflageelements auf. Insbesondere ist die Auflagefläche zunächst in einem Abstand zu der ersten Werkzeughälfte angeordnet. Aufgrund des Abstands der Auflagefläche zu der ersten Werkzeughälfte kann das Gewebe bei der Positionierung und Einfädelung auf dem Stift problemlos am Rand umgriffen werden. Dies ist insbesondere auch mittels eines Roboters, insbesondere mittels eines Roboterarms, möglich.

Insbesondere wird das Gewebe nach dem Einfädeln des Gewebes mit einem Halteelement, das aus der zweiten Werkzeughälfte hervorsteht, gegen die Auflagefläche gedrückt. Dadurch ist das Gewebe zumindest temporär während nachfolgender Bewegungen des Gewebes in seiner Position gesichert.

Insbesondere wird das Gewebe nach dem Einfädeln des Gewebes gemeinsam mit dem Auflageelement und der zweiten Werkzeughälfte auf die erste Werkzeughälfte zubewegt, so dass das Gewebe sowohl an der ersten Werkzeughälfte als auch an der zweiten Werkzeughälfte anliegt. Insbesondere ist der Abstand zwischen dem Auflageelement und der ersten Werkzeughälfte zu diesem Zeitpunkt kleiner als zuvor. Insbesondere ist zwischen der Auflagefläche und der ersten Werkzeughälfte kein Abstand mehr vorhanden. Dadurch kann das Gewebe auf einfache Weise in die Position gebracht werden, in der es während des Gussverfahrensschritts zur Herstellung des Rahmens sein soll.

Insbesondere bilden die erste Werkzeughälfte und die zweite Werkzeughälfte die Gussform, insbesondere das Gusswerkzeug, zur Herstellung des Rahmens während des Gussverfahrensschritts.

Insbesondere ist das Filterbauteil dazu vorgesehen, einen Teil einer Außenseite des Arbeitsgeräts zu bilden.

Die Erfindung betrifft ferner ein handgeführtes Arbeitsgerät umfassend einen Grundkörper und ein Filterbauteil zur Filterung von Kühlluft, wobei das Filterbauteil mittels des Befestigungselements an dem Grundkörper bezüglich einer Befestigungsrichtung befestigbar ist, wobei das Filterbauteil einen Rahmen besitzt, wobei das Filterbauteil ein entlang einer Umlaufrichtung umlaufendes Dichtelement zur Abdichtung zwischen dem Rahmen und dem Grundkörper aufweist, wobei das Dichtelement in Befestigungsrichtung zwischen dem Rahmen und dem Grundkörper angeordnet ist, wobei das Arbeitsgerät mindestens ein Anschlagelement zwischen dem Grundkörper und dem Rahmen umfasst, wobei eine Annäherung von Rahmen und Grundkörper in Befestigungsrichtung während der Befestigung des Filterbauteils an dem Grundkörper durch das Anschlagelement begrenzt ist.

Diesem Aspekt der Erfindung liegt die Erkenntnis zugrunde, dass es bei Befestigung eines gattungsgemäßen Filterbauteils mittels des Befestigungselements insbesondere bei Filterbauteilen mit großer Filterfläche zu ungewollten Passungenauigkeiten kommen kann, die dazu führen, dass die Abdichtung zwischen Grundkörper und Filterbauteilen mittels des Dichtelements nicht verlässlich erfolgt. Zwar könnte mittels des Befestigungselements ein so großer Druck auf das Filterbauteil gegen den Grundkörper ausgeübt werden, dass das Filterbauteil mit seinem Rahmen das Dichtelement überall an den Grundkörper presst, hierbei kann es aber zu ungewollt starker Verformung oder Komprimierung des Dichtelements kommen. Die Folge ist ein vorzeitiger schneller Verschleiß des Dichtelements und unter Umständen eine Undichtigkeit an der zu stark komprimierten Stelle des Dichtelements.

Gemäß des Erfindungsapekts soll ein Anschlagelement die ungewünschte, insbesondere elastische, Verformung, insbesondere Komprimierung, des Dichtelements lokal verhindern. Hierfür weist das Arbeitsgerät mindestens ein Anschlagelement zwischen dem Grundkörper und dem Rahmen auf. Eine Annäherung von Rahmen und Grundkörper in Befestigungsrichtung während der Befestigung des Filterbauteils an dem Grundkörper ist durch das Anschlagelement begrenzt. Insbesondere überbrückt das Anschlagelement einen Spalt zwischen dem Grundkörper und dem Rahmen lokal, insbesondere lokal begrenzt. Insbesondere überbrückt das Anschlagelement den Spalt zwischen dem Grundkörper und dem Rahmen lokal bezüglich der Umlaufrichtung des Dichtelements begrenzt. Dadurch kann der Rahmen des Filterbauteils an einer entfernt von dem Anschlagelement liegenden Stelle mit ausreichender Kraft mittels des Befestigungselements in Richtung auf den Grundkörper des handgeführten Arbeitsgeräts gepresst werden, so dass das Dichtelement zumindest sowohl an dem Rahmen als auch an dem Grundkörper in gewünschter Form anliegt. An der Stelle des Anschlagelements ist eine ungewünscht große Annäherung zwischen Rahmen und Grundkörper durch die Anlage des Anschlagelements sowohl am Grundkörper als auch am Rahmen verhindert. Dadurch wird eine ungewünscht große, insbesondere elastische, Verformung, insbesondere Komprimierung, des Dichtelements verhindert. Dadurch wird auf einfache Weise erreicht, dass das Dichtelement entlang seiner Umlaufrichtung überall in gewünschter Form sowohl an dem Grundkörper als auch an dem Rahmen anliegt. Auf einfache Weise kann so das Filterbauteil mittels des Befestigungselements an dem Grundkörper befestigt werden und gleichzeitig eine gute Dichtwirkung des Dichtelements erreicht werden. Insbesondere läuft das Dichtelement entlang der Umlaufrichtung geschlossen um. Insbesondere läuft das Dichtelement um die Befestigungsrichtung geschlossen um.

Insbesondere bildet das Filterbauteil einen Teil eine Außenseite des Arbeitsgeräts. Insbesondere ist das Filterbauteil an dem Grundkörper befestigt.

Insbesondere begrenzt das mindestens eine Anschlagelement eine, insbesondere elastische, Komprimierung, insbesondere Verformung, des Dichtelements in Befestigungsrichtung.

Insbesondere sind sowohl der Rahmen als auch der Grundkörper härter als das Dichtelement. Insbesondere ist das Dichtelement elastisch. Insbesondere ist das Dichtelement ein thermoplastisches Elastomer.

Insbesondere erstreckt sich das Anschlagelement bezüglich der Umlaufrichtung des Dichtelements lediglich über einen lokalen Teilbereich eines vollen Umlaufs. Der Teilbereich entspricht insbesondere einem Winkelbereich von < 20°. Insbesondere ist der Winkelbereich > 0,5°. Insbesondere überbrückt das Anschlagelement den Spalt zwischen dem Rahmen und dem Grundkörper derart, dass in Umlaufrichtung, insbesondere unmittelbar, vor dem Anschlagelement ein in Befestigungsrichtung gemessener erster Abstand zwischen dem Rahmen und dem Grundkörper ausgebildet ist und dass in Umlaufrichtung, insbesondere unmittelbar, nach dem Grundkörper ein zweiter in Befestigungsrichtung gemessener Abstand ausgebildet ist.

Insbesondere umfasst das Filterbauteil ein Gewebe. Das Gewebe ist insbesondere von dem Rahmen eingefasst. Insbesondere ist das Gewebe zumindest teilweise aus Metall. Insbesondere ist der Rahmen aus Kunststoff. Bei dieser Materialkombination ist eine Passgenauigkeit des Filterbauteils auf dem Grundkörper so, dass das Dichtelement überall wunschgemäß anliegt, besonders schwer zu erreichen. Aufgrund der verschiedenen Materialien des Filterbauteils kommt es zu einem Verzug des Bauteils, insbesondere bei Temperaturschwankungen.

Insbesondere ist zur Befestigung des Filterbauteils an dem Grundkörper ausschließlich ein einziges Befestigungselement vorgesehen. Bei der Befestigung mit lediglich einem einzigen Befestigungselement, insbesondere einer einzigen Schraube, ist die Passgenauigkeit des Filterbauteils auf dem Grundkörper des handgeführten Arbeitsgeräts besonders wichtig. In diesem Fall ist nämlich kein Ausgleich eines Verzugs des Filterbauteils durch ein zweites Befestigungselement möglich. Aufgrund des einzigen Befestigungselements ist aber eine besonders komfortable Befestigung des Filterbauteils an dem Grundkörper möglich. Insbesondere ist das Befestigungselement, insbesondere das einzige Befestigungselement, beabstandet zu einem Rand des Rahmens angeordnet. Dadurch kann das Befestigungselement in der Nähe oder sogar in dem Flächenschwerpunkt des Filterbauteils angeordnet sein. Dadurch ist eine gute und einfache Befestigung des Filterbauteils an dem Grundkörper möglich.

Insbesondere weist das Dichtelement an einer Komprimierungsstelle zwischen dem Rahmen und dem Grundkörper im vollständig komprimierten Zustand eine in Befestigungsrichtung gemessene Komprimierungshöhe auf. Insbesondere weist das Dichtelement im unkomprimierten Zustand an derselben Komprimierungsstelle eine in derselben Richtung gemessene Dichtelementhöhe auf. Optional begrenzt das mindestens eine Anschlagelement die Komprimierung des Dichtelements in Befestigungsrichtung an der Komprimierungsstelle derart, dass die Komprimierungshöhe mindestens 50%, insbesondere mindestens 70%, insbesondere mindestens 80%, insbesondere mindestens 90%, insbesondere mindestens 95%, der Dichtelementhöhe beträgt. Dadurch ist eine ungewollt starke Komprimierung des Dichtelements vermieden. Dadurch ist sichergestellt, dass das Dichtelement den Raum zwischen dem Grundkörper und dem Rahmen des Filterbauteils verlässlich abdichtet. Die Lebensdauer des Dichtelements ist nicht durch eine ungewollt zu starke Komprimierung des Dichtelements begrenzt.

Insbesondere besitzt der Rahmen eine in Umlaufrichtung, insbesondere geschlossen, umlaufende Rahmenkante und/oder der Grundkörper besitzt eine in Umlaufrichtung, insbesondere geschlossen, umlaufende Grundkörperfläche. Insbesondere ist die Rahmenkante eine dem Grundkörper zugewandte Fläche des Rahmens. Insbesondere ist die Rahmenkante benachbart, insbesondere unmittelbar benachbart, zu dem Dichtelement. Insbesondere steht das mindestens eine Anschlagelement in Befestigungsrichtung über die Rahmenkante und/oder über die Grundkörperfläche vor. Insbesondere ist das mindestens eine Anschlagelement am Rahmen des Filterbauteils oder am Grundkörper des handgeführten Arbeitsgeräts festgelegt. Insbesondere ist das mindestens eine Anschlagelement materialeinheitlich, insbesondere monolithisch, mit dem Rahmen oder dem Grundkörper ausgebildet. Dadurch ist das mindestens eine Anschlagelement auf einfache Weise herstellbar. Dadurch ist das mindestens eine Anschlagelement auf einfache Weise während der Herstellung des handgeführten Arbeitsgeräts positionierbar. Das Anschlagelement ist dadurch sicher an der gewünschten Stelle gehalten.

Insbesondere ist ein möglicher, in Richtung senkrecht zur Befestigungsrichtung gemessener Abstand zwischen dem Dichtelement und dem mindestens einen Anschlagelement kleiner als die fünffache, insbesondere die dreifache, insbesondere die einfache Dichtelementhöhe. Dadurch wirkt das Anschlagelement in der Nähe des Dichtelements. Dadurch ist auf einfache Weise sichergestellt, dass das Dichtelement nicht zu stark komprimiert wird. Es kann auch vorgesehen sein, dass zwischen dem Dichtelement und dem mindestens einen Anschlagelement überhaupt kein Abstand besteht.

In besonderer Weiterbildung der Erfindung sind mindestens zwei, insbesondere mehrere Anschlagelemente vorgesehen, die zueinander bezüglich der Umlaufrichtung beabstandet sind. Dadurch kann entlang der Umlaufrichtung an mehreren Stellen eine zu große Komprimierung des Dichtelements mittels der mindestens zwei, insbesondere mittels der mehreren Anschlagelemente verhindert werden.

Die Erfindung betrifft ferner ein Filterbauteil zur Filterung von Kühlluft für ein handgeführtes Arbeitsgerät, wobei das Filterbauteil dazu vorgesehen ist, einen Teil einer Außenseite des Arbeitsgeräts zu bilden und an einem Grundkörper des Arbeitsgeräts angebracht zu werden, wobei das Filterbauteil ein Peilelement zur Ausrichtung des Arbeitsgeräts, insbesondere zur Ausrichtung eines Werkzeugs des Arbeitsgeräts, umfasst, wobei das Filterbauteil ein Dichtelement zur Anlage an dem Grundkörper des handgeführten Arbeitsgeräts und zur Abdichtung zwischen dem Filterbauteil und dem Grundkörper aufweist, und wobei das Peilelement und das Dichtelement materialeinheitlich ausgebildet sind.

Das Filterbauteil zur Filterung von Kühlluft für ein handgeführtes Arbeitsgerät gemäß dieses Erfindungsaspekts ist dazu vorgesehen, einen Teil einer Außenseite des Arbeitsgeräts zu bilden und an einem Grundkörper des Arbeitsgeräts angebracht zu werden. Das Filterbauteil umfasst ein Peilelement zur Ausrichtung des Arbeitsgeräts, insbesondere zur Ausrichtung eines Werkzeugs des Arbeitsgeräts. Das Filterbauteil weist zur Anlage an dem Grundkörper des handgeführten Arbeitsgeräts und zur Abdichtung zwischen dem Filterbauteil und dem Grundkörper ein Dichtelement auf. Dadurch ist verhindert, dass ungefilterte Kühlluft in den Grundkörper des handgeführten Arbeitsgeräts eindringt. Ein möglicher Spalt zwischen dem Grundkörper des Arbeitsgeräts und dem Filterbauteil ist durch das Dichtelement abgedichtet. Durch diesen möglichen, aber aufgrund der Erfindung nicht vorhandenen Spalt könnte ansonsten ungefilterte Kühlluft angesaugt werden. Durch das Dichtelement wird eine sehr gute Filterwirkung des Filterbauteils erzielt. Erfindungsgemäß sind das Peilelement und das Dichtelement miteinander materialeinheitlich ausgebildet. Insbesondere bestehen das Peilelement und das Dichtelement aus dem gleichen Material. Insbesondere bestehen das Peilelement und das Dichtelement aus demselben Material. Dies ermöglicht eine einfache Herstellung sowohl des Peilelements als auch des Dichtelements. Insbesondere können das Peil- und das Dichtelement zusammen hergestellt werden. Zur Herstellung des Peilelements und des Dichtelements muss nur ein einziger Werkstoff verwendet werden. Dies spart Produktionskosten und vereinfacht die Lagerhaltung.

Insbesondere sind das Peilelement und das Dichtelement miteinander materialeinheiltich, insbesondere monolithisch, als Peil- und Dichtelement ausgebildet. Insbesondere sind das Peilelement und das Dichtelement miteinander zusammenhängend als Peil- und Dichtelement ausgebildet. Dies ermöglicht eine einfache Herstellung sowohl des Peilelements als auch des Dichtelements. Durch die gemeinsame monolithische Ausbildung als Peil- und Dichtelement können das Peilelement und das Dichtelement in einem einzigen Verfahrensschritt gemeinsam hergestellt, insbesondere gegossen, insbesondere spritzgegossen werden. Die gemeinsame Herstellung des Peilelements und des Dichtelements als monolithisches Peil- und Dichtelement spart Kosten und Zeit ein.

Insbesondere sind sowohl das Peilelement als auch das Dichtelement aus einem Elastomer, insbesondere aus einem thermoplastischen Elastomer. Dadurch ist eine einfache Herstellung sowohl des Peilelements als auch des Dichtelements möglich. Sowohl das Peilelement als auch das Dichtelement können insbesondere in einem einzigen Gussverfahrensschritt, insbesondere Spritzgussverfahrensschritt, hergestellt werden.

Insbesondere weist das Filterbauteil eine in Einbaulage des Filterbauteils dem Grundkörper des handgeführten Arbeitsgeräts zugewandte Innenseite auf. Insbesondere weist das Filterbauteil eine in Einbaulage des Filterbauteils dem Grundkörper des handgeführten Arbeitsgeräts abgewandte Außenseite auf. Insbesondere weist das Filterbauteil mindestens eine Durchflussöffnung, insbesondere mindestens zwei, insbesondere genau zwei, insbesondere genau vier Durchflussöffnungen, auf. Insbesondere durchdringt die mindestens eine Durchflussöffnung das Filterbauteil von der Innenseite zur Außenseite vollständig. Dies gilt insbesondere für alle Durchflussöffnungen, Insbesondere erstreckt sich das Peil- und Dichtelement durch die mindestens eine Durchflussöffnung hindurch. Dadurch kann das Peil- und Dichtelement auf einfache Weise in einem einzigen Gussverfahrensschritt hergestellt werden. Gleichzeitig dichtet das Peil- und Dichtelement die mindestens eine Durchflussöffnung bei der Herstellung des Peil- und Dichtelements ab. Dadurch kann durch die mindestens eine Durchflussöffnung keine ungefilterte Kühlluft durch das Filterbauteil strömen. Dies erhöht die Filterwirkung des Filterbauteils.

Insbesondere besitzt das Filterbauteil einen Rahmen. Insbesondere weist der Rahmen an der Innenseite des Filterbauteils einen Kanal zur Aufnahme des Dichtelements auf. Insbesondere weist der Rahmen an der Außenseite des Filterbauteils einen Peilelementkanal zur Aufnahme des Peilelements auf. Bei der Herstellung des Dichtelements kann das Material zur Herstellung des Dichtelements in den Kanal zur Aufnahme des Dichtelements gegossen, insbesondere spritzgegossen wird und sich hierbei in dem Kanal ausbreiten. Insbesondere steht das Dichtelement dann aus dem Kanal hervor. Insbesondere weist ein Rand des Kanals zur Aufnahme des Dichtelements eine geringere Höhe auf als die Höhe des Dichtelements. Bei der Herstellung des Peilelements kann Material zur Herstellung des Peilelements in den Peilelementkanal gegossen, insbesondere spritzgegossen werden und sich im Peilelementkanal ausbreiten. Dadurch ist eine einfache Herstellung sowohl des Dichtelements als auch des Peilelements möglich.

Insbesondere verbindet die mindestens eine Durchflussöffnung den Kanal zur Aufnahme des Dichtelements und den Peilelementkanal zur Aufnahme des Peilelements miteinander. Insbesondere ist der Kanal zur Aufnahme des Dichtelements an der Innenseite des Filterbauteils ausgebildet. Insbesondere ist der Peilelementkanal zur Aufnahme des Peilelements an der Außenseite des Filterbauteils ausgebildet. Aufgrund der mindestens einen Durchflussöffnung ist es auf einfache Weise möglich, sowohl das Peilelement als auch das Dichtelement in einem einzigen Gussverfahrensschritt herzustellen. Hierbei kann das Material zur Herstellung des Peil- und Dichtelements auf lediglich einer einzigen Seite des Filterbauteils eingebracht werden. Von dieser Seite fließt das Material zur Herstellung des Peil- und Dichtelements dann entweder im Kanal zur Aufnahme des Dichtelements oder im Peilelementkanal zur Aufnahme des Peilelements zur mindestens einen Durchflussöffnung und dringt so auf die andere Seite des Filterbauteils vor, um dann in den jeweils anderen Kanal vorzudringen. Insbesondere befindet sich die Angussstelle auf der Außenseite des Filterbauteils. Insbesondere wird das Material zur Herstellung des Peil- und Dichtelements über die Angussstelle zunächst in den Peilelementkanal zur Aufnahme des Peilelements eingebracht und fließt von dort zur mindestens einen Durchflussöffnung. Insbesondere fließt das Material zur Herstellung des Peil- und Dichtelements dann durch die mindestens eine Durchflussöffnung hindurch auf die Innenseite des Filterbauteils in den Kanal zur Aufnahme des Dichtelements. Insbesondere kontrastieren der Grundkörper, insbesondere der Rahmen, und das Peilelement farblich zueinander. Dadurch ist das Peilelement gut erkennbar. Insbesondere setzt sich das Peilelement farblich von dem Grundkörper, insbesondere dem Rahmen, ab.

Insbesondere ist das Peilelement auf der Außenseite des Filterbauteils angeordnet. Dadurch ist das Peilelement schnell und einfach erkennbar.

Insbesondere ist das Filterbauteil zur Filterung von Kühlluft Bestandteil eines handgeführten Arbeitsgeräts.

Das handgeführte Arbeitsgerät mit dem Filterbauteil wie vorstehend beschrieben mit einem Peilelement auf der Außenseite des Filterbauteils umfasst insbesondere ein Werkzeug. Das Werkzeug besitzt eine Längserstreckung. Insbesondere weist das Peilelement eine Stechleiste oder eine Fällleiste auf. Es kann auch vorgesehen sein, dass das Peilelement sowohl eine Stechleiste als auch eine Fällleiste aufweist. Die Stechleiste erstreckt sich in Einbaulage insbesondere im Wesentlichen in Richtung der Längserstreckung. Die Fällleiste erstreckt sich in Einbaulage insbesondere im Wesentlichen in Richtung quer, insbesondere in Richtung senkrecht zur Richtung der Längserstreckung. Die Stechleiste gibt dem Benutzer eine Information über den Verlauf der Längserstreckung des Werkzeugs, auch wenn das Werkzeug nicht zu sehen ist. Dies ist beispielsweise hilfreich, wenn das Werkzeug durch ein Werkstück verdeckt ist. Dies kann beispielsweise bei einer handgeführten Motorsäge der Fall sein, wenn das als Führungsschiene mit Sägekette ausgebildete Werkzeug in einem Sägespalt steckt. Beim Fällen eines Baums kann die Fällleiste die Fallrichtung des Baumes anzeigen.

Insbesondere verläuft eine Längsrichtung der Stechleiste quer, insbesondere senkrecht, zu einer Längsrichtung der Fällleiste.

Insbesondere weist die Stechleiste einen ersten Stechleistenabschnitt und einen zweiten Stechleistenabschnitt auf. Insbesondere sind der erste Stechleistenabschnitt und der zweite Stechleistenabschnitt in Ansicht in Durchströmungsrichtung beanstandet zueinander ausgebildet.

Insbesondere weist die Fällleiste insbesondere einen ersten Fällleistenabschnitt und einen zweiten Fällleistenabschnitt auf. Insbesondere sind der erste Fällleistenabschnitt und der zweite Fällleistenabschnitt in Ansicht in Durchströmungsrichtung beanstandet zueinander ausgebildet.

Insbesondere ist das Filterbauteil des handgeführten Arbeitsgeräts so gestaltet, dass die monolithische, insbesondere die materialeinheitliche und zusammenhängende Ausgestaltung der Stechleiste des Peilelements und der Fällleiste des Peilelements auf der Außenseite des Filterbauteils nicht erkennbar ist. Insbesondere sind die Stechleiste und die Fällleiste derart angeordnet, dass die materialeinheitliche, insbesondere monolithische, Ausgestaltung der Stechleiste des Peilelements und der Fällleiste des Peilelements auf der Außenseite des Filterbauteils nicht erkennbar ist. Insbesondere sind die Stechleiste und die Fällleiste derart angeordnet, dass sie durch Verdeckungen, insbesondere durch den Rahmen, voneinander getrennt erscheinen. Dadurch ist eine klare Trennung zwischen der Fällleiste und der Stechleiste möglich. Dies erleichtert die Orientierung mittels der Stechleiste und der Fällleiste.

Die Erfindung betrifft ferner ein Verfahren zur Herstellung eines Filterbauteils zur Filterung von Kühlluft für ein handgeführtes Arbeitsgerät. Demnach ist das Filterbauteil dazu vorgesehen, einen Teil einer Außenseite des Arbeitsgeräts zu bilden und an einem Grundkörper des Arbeitsgeräts angebracht zu werden. Das Filterbauteil umfasst ein Peilelement zur Ausrichtung des Arbeitsgeräts, insbesondere zur Ausrichtung eines Werkzeugs des Arbeitsgeräts. Das Filterbauteil weist ein Dichtelement zur Anlage an dem Grundkörper des handgeführten Arbeitsgeräts und zur Abdichtung zwischen dem Filterbauteil und dem Grundkörper auf. Das Peilelement und das Dichtelement werden in einem einzigen Gussverfahrensschritt gegossen. Hierbei wird ein Peil- und Dichtelement ausgebildet. Dies ist mit den oben im Zusammenhang mit dem Filterbauteil beschriebenen Vorteilen verbunden. Das Peil- und Dichtelement ist insbesondere monolithisch. Das erfindungsgemäße Verfahren kann um die oben im Zusammenhang mit dem Filterbauteil beschriebenen Merkmalen weitergebildet werden. Insbesondere sind das Peilelement und das Dichtelement miteinander materialeinheitlich und zusammenhängend als Peil- und Dichtelement ausgebildet.

Ausführungsbeispiele der Erfindung werden im Folgenden anhand der Zeichnung erläutert. Es zeigen:
- Fig. 1: eine schematische Darstellung einer Seitenansicht auf ein handgeführtes Arbeitsgerät mit einem Filterbauteil zur Filterung von Kühlluft,
- Fig. 2: eine originalgetreue Darstellung des in Fig. 1 schematisch dargestellten Filterbauteils in Seitenansicht,
- Fig. 3: eine originalgetreue Darstellung des Filterbauteils aus Fig. 2 in Seitenansicht auf die Innenseite des Filterbauteils,
- Fig. 4a: eine Schnittdarstellung eines Schnitts durch das originalgetreue Arbeitsgerät und das originalgetreue Filterbauteil mit auf der Außenseite angeordnetem Stützgewebe und auf der Innenseite angeordnetem Filtergewebe entlang der in der schematischen Darstellung nach Fig. 1 eingezeichneten Schnittebene IV-IV,
- Fig. 4b: eine Schnittdarstellung analog zu Fig. 4a von einem alternativen Ausführungsbeispiel eines Filterbauteils mit auf der Außenseite angeordnetem Filtergewebe und auf der Innenseite angeordnetem Stützgewebe,
- Fig. 5: eine Schnittdarstellung analog zu Fig. 4a und 4b in vergrößerter Detailansicht an der in Fig. 4a und 4b mit V gekennzeichneten Stelle von einem weiteren alternativen Ausführungsbeispiel eines Filterbauteils mit auf der Außenseite angeordnetem Stützgewebe, auf der Innenseite angeordnetem weiterem Stützgewebe und mit dazwischen angeordnetem Filtergewebe,
- Fig. 6a: eine schematische Darstellung eines Ausschnitts einer ersten Variante des Stützgewebes des Filterbauteils aus den Fig. 1 bis 5,
- Fig. 6b: eine schematische Darstellung eines Ausschnitts einer ersten Variante des Filtergewebes des Filterbauteils aus den Fig. 1 bis 5,
- Fig. 7a: eine schematische Darstellung eines Ausschnitts einer zweiten Variante des Stützgewebes des Filterbauteils aus den Fig. 1 bis 5,
- Fig. 7b: eine schematische Darstellung eines Ausschnitts einer zweiten Variante des Filtergewebes des Filterbauteils aus den Fig. 1 bis 5,
- Fig. 8: eine schematische perspektivische Darstellung eines Ausschnitts eines Stützfiltergewebes, das im Filterbauteil nach den Fig. 1 bis 5 anstatt des dort vorgesehenen Gewebes vorgesehen sein kann,
- Fig. 9: eine schematische Darstellung entlang der in Fig. 8 eingezeichneten Schnittebene IX,
- Fig. 10: die Darstellung des Filterbauteils aus Fig. 3 in alternativer Ausgestaltung des Filterbauteils mit Dichtelement und Anschlagelement,
- Fig. 11: eine perspektivische Darstellung einer ersten Werkzeughälfte eines Gusswerkzeugs mit Stiften, auf denen das Gewebe des Filterbauteils aufgesteckt ist,
- Fig. 12: eine Schnittdarstellung eines Schnitts durch die erste Werkzeughälfte aus Fig. 11 mit auf den Stift gestecktem Gewebe,
- Fig. 13: einen Schnitt analog zu der Schnittdarstellung aus Fig. 12 sowohl durch die erste Werkzeughälfte als auch durch die zweite Werkzeughälfte des Gusswerkzeugs in einem Zustand, in dem die beiden Werkzeughälften zwar voneinander entfernt sind, das Gewebe jedoch von einem aus der zweiten Werkzeughälfte vorragenden Halteelement auf eine Auflagefläche eines aus der ersten Werkzeughälfte vorragenden Auflageelements gedrückt wird,
- Fig. 14: eine Schnittdarstellung eines Schnitts parallel zu der Schnittebene des Schnitts aus Fig. 13 im selben Zustand des Gusswerkzeugs,
- Fig. 15: eine Schnittdarstellung des Gusswerkzeugs analog zur Schnittdarstellung aus Fig. 13, wobei die erste Werkzeughälfte und die zweite Werkzeughälfte soweit wie möglich aneinander angenähert sind und sich das auf den Stift gesteckte Gewebe zwischen der ersten Werkzeughälfte und der zweiten Werkzeughälfte befindet,
- Fig. 16: eine Ansicht auf das Filterbauteil analog zu der Ansicht aus Fig. 2, wobei in Fig. 16 ein alternatives Ausführungsbeispiel für das Filterbauteil gezeigt ist, in dem das Filterbauteil ein Peilelement aufweist,
- Fig. 17: eine Schnittdarstellung eines Schnitts entlang der in Fig. 16 eingezeichneten Schnittebene XVII-XVII,
- Fig. 18: eine Schnittdarstellung eines Schnitts entlang der in Fig. 16 eingezeichneten Schnittebene XVIII-XVIII,
- Fig. 19: eine perspektivische Explosionsdarstellung des Filterbauteils aus Fig. 16, die die Form des Peil- und Dichtelements zeigt,
- Fig. 20: eine perspektivische Teilexplosionsdarstellung eines Teils des Grundkörpers des handgeführten Arbeitsgeräts und des Filterbauteils aus Fig. 16,
- Fig. 21: einen Schnitt durch das in Fig. 20 dargestellte Filterbauteil und dem Grundkörper im zusammengebauten Zustand,
- Fig. 22: eine Detaildarstellung eines in Fig. 21 mit XXII gekennzeichneten Details,
- Fig. 23: eine schematische Darstellung eines Schnitts entlang der Schnittebene XXIII-XXIII aus Fig. 22,
- Fig. 24: eine schematische Darstellung eines alternativen Gusswerkzeugs zur Herstellung eines alternativen Ausführungsbeispiels für ein Filterbauteil, wobei das Gewebe des Filterbauteils zwischen den beiden Werkzeughälften des Gusswerkzeugs auf einen Stift des Gusswerkzeugs aufgefädelt ist und der Stift sowohl an der ersten Werkzeughälfte als auch an der zweiten Werkzeughälfte anliegt und
- Fig. 25: eine schematische Darstellung analog zu Fig 24, wobei der Stift nicht mehr an der zweiten Werkzeughälfte anliegt, sondern von Material zur Herstellung des Rahmens zurückgedrängt ist.

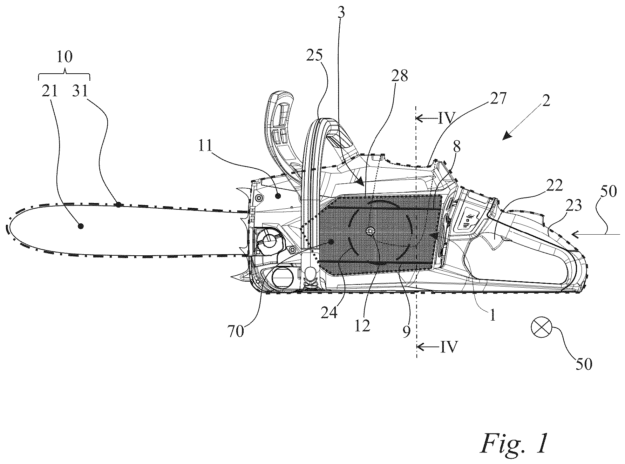

Fig. 1 zeigt ein handgeführtes Arbeitsgerät 2. Bei dem handgeführten Arbeitsgerät 2 handelt es sich in den Ausführungsbeispielen um eine handgetragene Motorkettensäge. Bei dem handgeführten Arbeitsgerät 2 kann es sich aber auch um einen Freischneider, einen Gehölzschneider, eine Säbelsäge, ein Saug- und/oder Blasgerät, eine Heckenschere, einen Trennschleifer, einen Hochentaster, einen Rasenmäher oder ein ähnliches Arbeitsgerät handeln. Das Arbeitsgerät 2 ist im bestimmungsgemäßen Einsatz tragbar. Das Arbeitsgerät 2 ist im bestimmungsgemäßen Einsatz handgeführt. Insbesondere ist das handgeführte Arbeitsgerät 2 eine Motorkettensäge. In den Ausführungsbeispielen ist das handgeführte Arbeitsgerät 2 eine sogenannte Rearhandle-Kettensäge. Das handgeführte Arbeitsgerät 2 kann aber auch eine als Baumpflegesäge bezeichnete Kettensäge sein.

Das Arbeitsgerät 2 besitzt ein Werkzeug 10. Im Ausführungsbeispiel ist das Werkzeug 10 eine Führungsschiene 21 mit einer Sägekette 31. Die Sägekette 31 ist auf der Führungsschiene 21 geführt. Wie in Fig. 1 schematisch durch gestrichelte Linie dargestellt, besitzt das handgeführte Arbeitsgerät 2 einen Motor 24 zum Antrieb des Werkzeugs 10, insbesondere der Sägekette 31. In den Ausführungsbeispielen ist der Motor 24 ein Elektromotor. Bei dem Werkzeug 10 kann es sich auch um ein Sägeblatt, eine Trennscheibe, einen Trimmfaden oder ähnliches handeln. In den Ausführungsbeispielen läuft die Sägekette 31 im Betrieb um die Führungsschiene 21 um. Der Motor 24 treibt im Ausführungsbeispiel die Sägekette 31 an. Der Motor 24 ist in einem Grundkörper 11 angeordnet. Der Grundkörper 11 besitzt ein Außengehäuse.

Das Arbeitsgerät 2 umfasst in allen Ausführungsbeispielen einen Bediengriff 23. Am Bediengriff 23 ist ein Bedienelement 22 angeordnet. Mittels des Bedienelements 22 kann der Bediener die Leistung des Motors 24 bzw. die Drehzahl des Motors 24 oder des Werkzeugs 10, insbesondere der Sägekette 31, vorgeben. Der Bediengriff 23 ist Bestandteil des Grundkörpers 11 des handgeführten Arbeitsgeräts 2. Der Bediengriff ist am hinteren Ende des Grundkörpers 11 angeordnet. Am vorderen Ende des Grundkörpers 11 ragt das Werkzeug 10, in den Ausführungsbeispielen die Führungsschiene 21, aus dem Grundkörper 11 hervor. Zusätzlich zum Bediengriff 23 umfasst das Arbeitsgerät 2 einen Bügelgriff 25. Der Bügelgriff 25 dient zum Tragen und Führen des Arbeitsgeräts 2. Der Bügelgriff 25 ist von einem Griffrohr gebildet. Der Benutzer kann das Griffrohr vollständig umgreifen. Der Bügelgriff 25 ist zwischen dem Bediengriff 23 und dem Werkzeug 10 angeordnet. Insbesondere ist der Bügelgriff 25 in Seitenansicht zwischen dem Bediengriff 23 und dem Werkzeug 10 angeordnet.

Das Werkzeug 10 ist im Betrieb des Arbeitsgeräts 2 vom Benutzer abgewandt. Der Bediengriff 23 ist im Betrieb des Arbeitsgeräts 2 dem Benutzer zugewandt.

Das handgeführte Arbeitsgerät 2 umfasst ein Filterbauteil 1. Das Filterbauteil 1 dient zur Filterung von Kühlluft. Das Filterbauteil 1 ist dazu vorgesehen, einen Teil einer Außenseite 3 des handgeführten Arbeitsgeräts 2 zu bilden. Das Filterbauteil 1 ist dazu vorgesehen, an dem Grundkörper 11 des Arbeitsgeräts 2 angebracht zu werden. In Fig. 1 bildet das Filterbauteil 1 einen Teil der Außenseite 3 des Arbeitsgeräts 2 und ist an dem Grundkörper 11 des Arbeitsgeräts 2 angebracht. Im Ausführungsbeispiel nach Fig. 1 ist das Filterbauteil 1 mittels eines Befestigungselements 12 an dem Grundkörper 11 befestigt. Durch das Filterbauteil 1 kann Kühlluft von außen in das Arbeitsgerät 2 eintreten. Die Kühlluft dient im Ausführungsbeispiel zur Kühlung des Motors 24. Mittels des Filterbauteils 1 wird die Kühlluft von Partikeln und Verunreinigungen gereinigt.

In den Ausführungsbeispielen umfasst das Arbeitsgerät 1 ein nicht dargestelltes Gebläse. Das Gebläse dient zum Ansaugen der Kühlluft. Das Gebläse ist in dem Grundkörper 11 angeordnet. Der Motor 24 treibt das Gebläse an. Das Gebläse saugt Kühlluft durch das Filterbauteil 1 hindurch in das Innere des Grundkörpers 11 an.

Das Filterbauteil 1 ist an einer Seite des Grundkörpers 11 angeordnet. Im Ausführungsbeispiel erstreckt sich das Werkzeug 10 in einer Werkzeugebene. Die Sägekette 31 läuft in der Werkzeugebene um. Die Werkzeugebene teilt den Grundkörper 11 in eine erste und eine zweite Hälfte. Das Filterbauteil 1 ist vollständig in einer der beiden Hälften angeordnet. In Seitenansicht senkrecht auf die Werkzeugebene ist das Filterbauteil 1 erkennbar und lediglich von dem Bügelgriff 25 teilweise verdeckt. Der Bügelgriff 25 übergreift den Grundkörper 11.

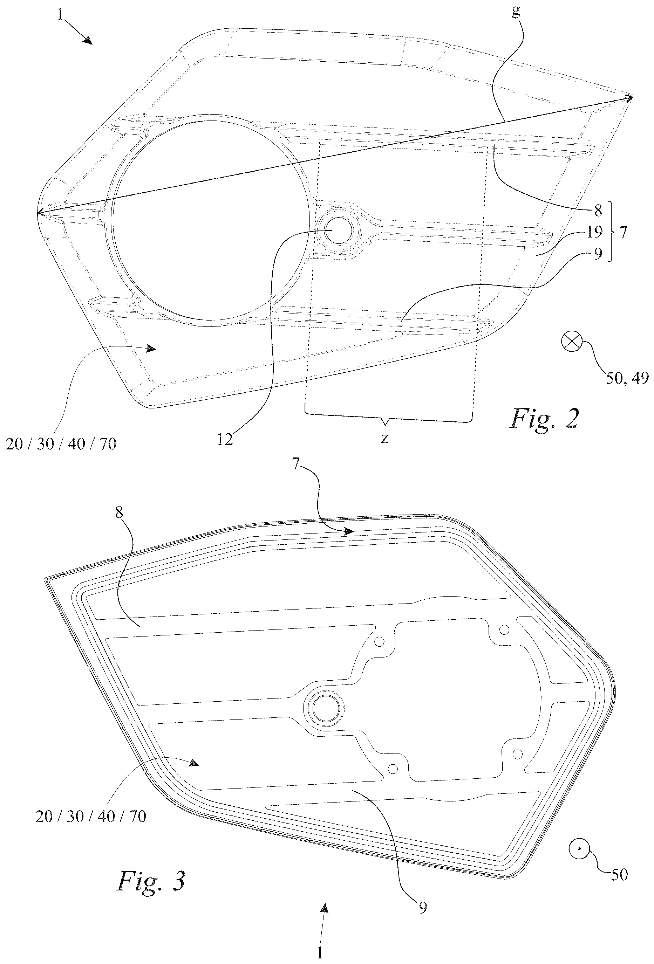

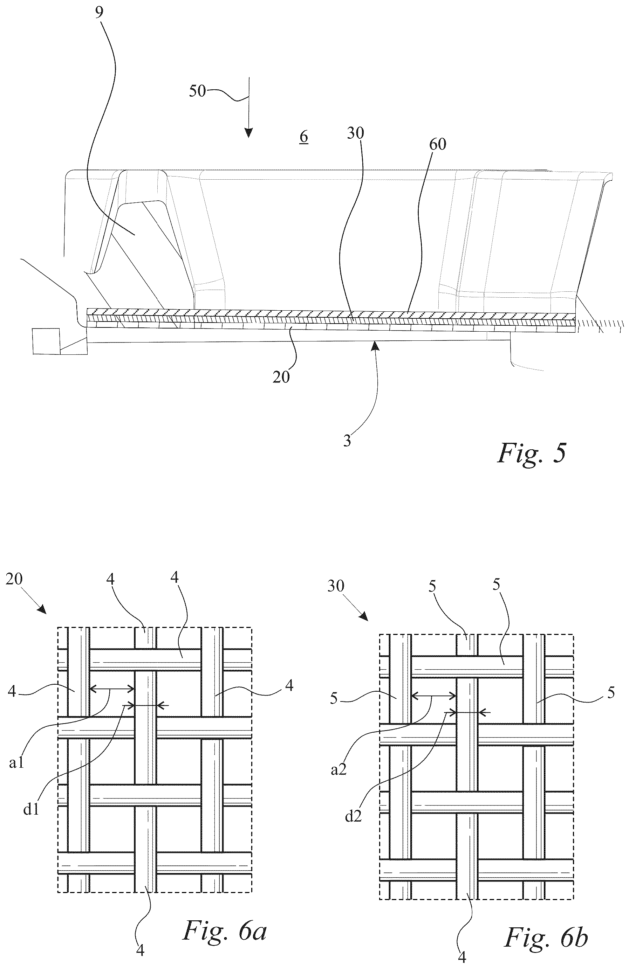

Wie insbesondere in den Fig. 2 und 3 dargestellt, besitzt das Filterbauteil 2 ein Gewebe 70. Das Filterbauteil 1, insbesondere das Gewebe 70, umfasst dicke Fadenelemente 4 und dünne Fadenelemente 5, die in den Fig. 6 bis 9 dargestellt sind. Zur Filterung der Kühlluft sind sowohl die dünnen Fadenelemente 5 als auch die dicken Fadenelemente 4 von der Kühlluft zu passieren. Die dicken Fadenelemente 4 und die dünnen Fadenelemente 5 sind jeweils fadenförmig. Die dicken Fadenelemente 4 dienen zur Abstützung der dünnen Fadenelemente 5. Die dicken Fadenelemente 4 sind dicker als die dünnen Fadenelemente 5.

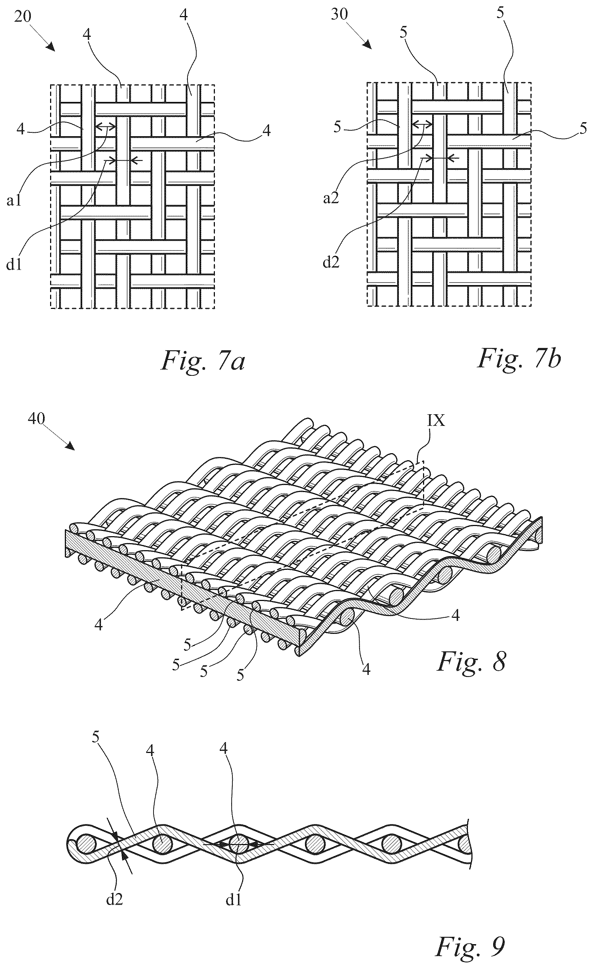

Die Fadenelemente 4, 5 sind jeweils längliche Gebilde, die sich entlang einer Längsrichtung erstrecken. Ein Querschnitt senkrecht zu dieser Längsrichtung, die insbesondere nicht geradlinig verlaufen muss, besitzt einen runde, insbesondere eine kreisförmige Außenkontur. Wie in Fig. 6a oder 7a dargestellt, besitzen die dicken Fadenelemente 4 einen Durchmesser d1. Der Durchmesser d1 ist senkrecht zur Längsrichtung des zugehörigen dicken Fadenelements 4 gemessen. Der Durchmesser d1 entspricht der größten Ausdehnung des zugehörigen Querschnitts des dicken Fadenelements 4.

Wie in Fig. 6b oder 7b dargestellt, besitzen die dünnen Fadenelemente 5 jeweils einen Durchmesser d2. Der Durchmesser d2 ist senkrecht zur Längsrichtung des zugehörigen dünnen Fadenelements 5 gemessen. Der Durchmesser d2 entspricht der größten Ausdehnung des zugehörigen Querschnitts des dünnen Fadenelements 5. Der Durchmesser d1 der dicken Fadenelemente 4 ist größer als der Durchmesser d2 der dünnen Fadenelemente 5. Im Ausführungsbeispiel nach den Fig. 1 bis 7 sind die dicken Fadenelemente 4 für sich genommen zu einem Stützgewebe 20 verwoben, insbesondere verwirkt, und die dünnen Fadenelemente 5 sind für sich genommen zu einem Filtergewebe 30 verwoben, insbesondere verwirkt. Eine erste Variante der Struktur des Stützgewebes 20 ist in Fig. 6a dargestellt. Fig. 7a zeigt eine zweite Variante der Struktur des Stützgewebes 20. Eine erste Variante der Struktur des Filtergewebes 30 ist in Fig. 6b dargestellt. Fig. 7b zeigt eine zweite Variante der Struktur des Filtergewebes 30. Fig. 5 zeigt, dass sich das Filtergewebe 30 im Betrieb an dem Stützgewebe 20 abstützt. Insbesondere stützt sich das Filtergewebe 30 im Betrieb unmittelbar an dem Stützgewebe 20 ab. Im Betrieb liegt das Filtergewebe 30 an dem Stützgewebe 20 an. Die dünnen Fadenelemente 5 des Filtergewebes 30 kontaktieren im Betrieb die dicken Fadenelemente 4 des Stützgewebes 20. Insbesondere bei einem Durchströmen des Filterbauteils 1 mit einem Kühlluftstrom liegen das Filtergewebe 30 und das Stützgewebe 20 aneinander an. Es kann aber auch vorgesehen sein, dass das Filtergewebe 30 und das Stützgewebe 20 immer aneinander anliegen. Das Gewebe 70 ist durch das Filtergewebe 30 und das Stützgewebe 20 gemeinsam gebildet.

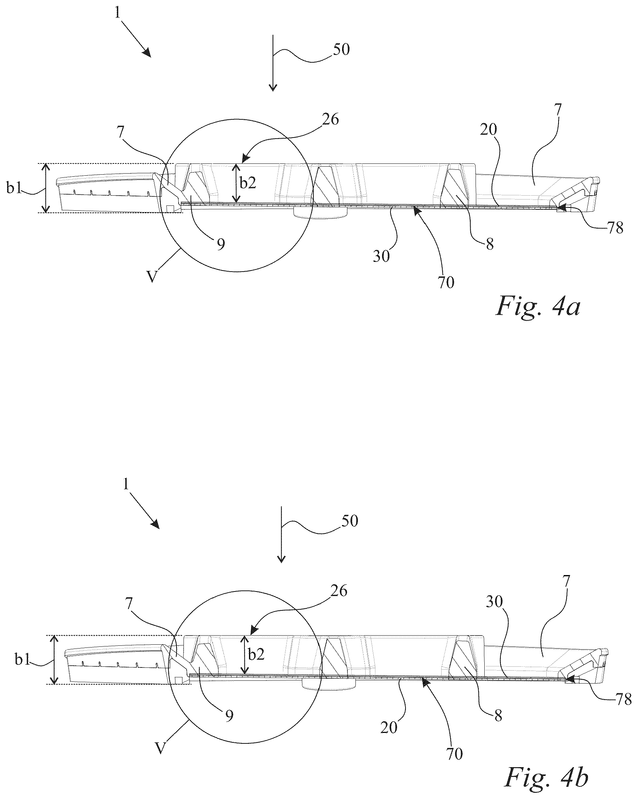

Wie in Fig. 4a oder Fig. 5 dargestellt, ist das Stützgewebe 20 zur Anordnung im Arbeitsgerät 2 so vorgesehen, dass es einen Teil der Außenseite 3 des Arbeitsgeräts 2 bildet. Das Filtergewebe 30 ist einem Innenbereich 6 des Arbeitsgeräts 2 zugewandt. Es kann aber auch eine umgekehrte Anordnung des Stützgewebes 20 und des Filtergewebes 30 vorgesehen sein, wie in Fig. 4b dargestellt. Bei einer Anordnung des Filtergewebes 30 so, dass das Filtergewebe 30 einen Teil der Außenseite 3 des Arbeitsgeräts 2 bildet, ergibt sich daraus, dass das Filtergewebe 30 glatter ist als das Stützgewebe 20, der Vorteil, dass auch die Außenseite 3 dann glatter ist als bei umgekehrter Anordnung. Schmutz und gefilterte Partikel dringen dann in vermindertem Maß zum Stützgewebe 20 vor und können sich nicht im selben Maß festsetzen. Durch Vibrationen im Betrieb des Arbeitsgeräts 2 und Erschütterungen können Schmutz und Partikel sich teilweise oder ganz wieder vom Filtergewebe 30 lösen und abfallen. Auch die Reinigung des Filterbauteils 1 von außen, beispielsweise mit einem Besen ist dadurch erleichtert.

Wie in Fig. 6a, bzw. Fig. 7a, dargestellt, besitzt das Stützgewebe 20 eine Stützmaschenweite a1. Das Filtergewebe 30 besitzt eine in Fig. 6b, bzw. Fig. 7b dargestellte Filtermaschenweite a2. Die Maschenweite ist jeweils die lichte Weite zwischen zwei benachbarten, in selber Richtung verlaufenden Fadenelementen. Die Maschenweite definiert, welche Partikelgrößen vom Stützgewebe 20 bzw. vom Filtergewebe 30 zurückgehalten werden. Wenn die lichten Weiten einer Masche in die beiden Richtungen senkrecht zur Längserstreckung der sich kreuzenden Fäden unterschiedlich groß sind, entspricht die Maschenweite der kleineren der beiden lichten Weiten. Die Stützmaschenweite a1 des Stützgewebes 20 ist größer als die Filtermaschenweite a2 des Filtergewebes 30.

Wie in Fig. 5 eingezeichnet, kann optional ein weiteres Stützgewebe 60 vorgesehen sein. In diesem Fall ist das Filtergewebe 30 zwischen dem Stützgewebe 20 und dem weiteren Stützgewebe 60 angeordnet. Das Gewebe 70 ist dann durch das Filtergewebe 30, das Stützgewebe 20 und das weitere Stützgewebe 60 gebildet. Das weitere Stützgewebe 60 ist analog zum Stützgewebe 20 aus weiteren dicken Fadenelementen gebildet. Die weiteren dicken Fadenelemente sind analog zu den dicken Fadenelementen 4 ausgebildet. Die weiteren dicken Fadenelemente des weiteren Stützgewebes 60 sind für sich genommen zu dem weiteren Stützgewebe 60 verwoben, insbesondere verwirkt. Das weitere Stützgewebe 60 ist unabhängig vom Stützgewebe 20 ausgebildet. Das weitere Stützgewebe 60 ist unabhängig vom Filtergewebe 30 ausgebildet. In den in den Fig. 4a und 4b dargestellten Varianten des Filterbauteils 1 liegen das Stützgewebe 20 und das Filtergewebe 30 schichtweise aufeinander. In Fig. 5 liegen das Stützgewebe 20, das Filtergewebe 30 und das weitere Stützgewebe 60 schichtweise aufeinander. In allen Fällen ist ein zwei- oder mehrlagiger Filter gebildet.

Alternativ zur Gestaltung des Filterbauteils 1 mit einem Stützgewebe 20 und einem Filtergewebe 30 kann bei dem Filterbauteil 1 nach den Fig. 1 bis 5 vorgesehen sein, dass die dicken Fadenelemente 4 und die dünnen Fadenelemente 5 gemeinsam zu einem einzigen Stützfiltergewebe 40 verwoben, insbesondere verwirkt, sind. In diesem Fall ist insbesondere kein weiteres Stützgewebe 60 vorgesehen. Das filternde Gewebe 70 ist dann ausschließlich durch das Stützfiltergewebe 40 gebildet.

Das Stützfiltergewebe 40 ist in den Fig. 8 und 9 dargestellt. Bei dem Stützfiltergewebe 40 sorgen die dicken Fadenelemente 4 für eine ausreichende mechanische Stabilität des Stützfiltergewebes 40, und die dünnen Fadenelemente 5 bewirken, dass die Maschenweite des Stützfiltergewebes 40 hinreichend klein für eine gute Filterwirkung durch das Stützfiltergewebe 40 ist.

In der Ausführung nach Fig. 6a sind die dicken Fadenelemente 4 des Stützgewebes 20 in Leinwandbindung miteinander verwoben. In analoger Weise sind die dünnen Fadenelemente des Filtergewebes 30 in Fig. 6b ebenfalls in Leinwandbindung miteinander verwoben. Insbesondere sind die dicken Fadenelemente 4 und die dünnen Fadenelemente 5 des Stützfiltergewebes 40 in Leinwandbindung miteinander verwoben, analog zu der in den Fig. 6a und 6b dargestellten Leinwandbindung. Bei der Leinwandbindung liegt jeder Kettfaden (Kette) abwechselnd über und unter einem Schussfaden (Schuss) und jeder Schussfaden abwechselnd über und unter einem Kettfaden. Der Kettfaden ist ein Faden einer Kette. Die Kette ist die Gesamtzahl der Fäden gleicher Länge, die auf einem Kettbaum oder mehreren Teilkettbäumen annähernd parallel aufgewickelt sind und von dort in Längsrichtung der Arbeitsstelle der Kettenwirkmaschine zugeführt werden. Als Schussfaden wird der im Gewebe quereingetragene Faden bezeichnet, der quer, insbesondere im rechten Winkel, zu den Kettfäden verläuft. Vorliegen kann der Begriff Faden in sämtlichen Wortbildungen, die ihn enthalten auch durch Draht ersetzt werden. Dies beschreibt insbesondere für Gewebe oder Gewirke aus Metall (oder auch Kunststoff) die Situation treffender. Dementsprechend können die Kettfäden auch als Kettdrähte und die Schussfäden auch als Schussdrähte bezeichnet werden.

In der Ausführung nach Fig. 7a sind die dicken Fadenelemente 4 des Stützgewebes 20 in Köperbindung miteinander verwoben. In analoger Weise sind die dünnen Fadenelemente des Filtergewebes 30 in Fig. 6b ebenfalls in Köperbindung miteinander verwoben. Insbesondere sind die dicken Fadenelemente 4 und die dünnen Fadenelemente 5 des Stützfiltergewebes 40 in Köperbindung miteinander verwoben, analog zu der in den Fig. 7a und 7b dargestellten Köperbindung. Die Köperbindung zeichnet sich durch ein charakteristisches Diagonalmuster aus, das durch die spezifische Anordnung der Kett- und Schussfäden entsteht. Bei der Köperbindung wird der Schussfaden über einen Kettfaden geführt, dann unter mindestens zwei Kettfäden hindurch, dann wieder über einen Kettfaden hinweg und so fort. Dieser Rhythmus wird in der nächsten Reihe um einen Kettfaden versetzt fortgesetzt. Die Versetzung erfolgt immer in derselben Richtung. Dies führt zu einer Oberflächenstruktur mit diagonalen Rillen, die als Grate bezeichnet werden.

Die dicken Fadenelemente 4 besitzen eine größere Steifigkeit als die dünnen Fadenelemente 5. Die weiteren dicken Fadenelemente des weiteren Stützgewebes 60 besitzen ebenfalls eine größere Steifigkeit als die dünnen Fadenelemente 5. In den Ausführungsbeispielen sind die dicken Fadenelemente 4 und/oder die dünnen Fadenelemente 5 aus Metall, insbesondere aus nichtrostendem Metall, insbesondere aus Edelstahl. Es kann aber auch vorgesehen sein, dass die dicken Fadenelemente 4 und/oder die dünnen Fadenelemente 5 aus Kunststoff sind. Diese Materialangaben gelten sowohl für Ausführungsbeispiele, bei denen das Filterbauteil 1 ein Stützgewebe 20 und ein Filtergewebe 30 und optional zusätzlich ein weiteres Stützgewebe 60 umfasst, als auch für Ausführungsbeispiele, bei denen das Filterbauteil 1 ein Stützfiltergewebe 40 umfasst. Es sind auch Materialkombinationen denkbar. Beispielsweise können die dicken Fadenelemente 4 aus Metall, insbesondere aus nichtrostendem Metall, insbesondere aus Edelstahl sein und die dünnen Fadenelemente 5 aus Kunststoff. Ebenso ist es denkbar, dass die dicken Fadenelemente 4 aus Kunststoff sind und die dünnen Fadenelemente 5 aus Metall, insbesondere aus nichtrostendem Metall, insbesondere aus Edelstahl. Für den Fall, dass das weitere Stützgewebe 60 vorgesehen ist, sind die weiteren dicken Fadenelemente aus demselben Material wie die dicken Fadenelemente 4 des Stützgewebes 20. Es kann aber auch vorgesehen sein, dass die weiteren Fadenelemente des weiteren Stützgewebes 60 aus dem jeweils anderen Material wie die dicken Fadenelemente 4 des Stützgewebes 20 sind.

Im Ausführungsbeispiel nach Fig. 8 sind die dicken Fadenelemente 4 und die dünnen Fadenelemente 5 des Stützfiltergewebes 40 zu einem Tressengewebe verwoben. Insbesondere liegen bei den Tressengeweben entweder die Kett- oder die Schussfäden so dicht aneinander, dass in der Projektion keine Masche mehr sichtbar ist (Nullmasche), so dass damit eine sehr gute Filterwirkung erzielt wird. Die Filterung erfolgt durch die zum Teil im Inneren des Tressengewebes liegenden Zwischenräume. Liegen die Kettfäden eng aneinander, so spricht man auch von umgekehrten Tressen- oder Panzerpressengeweben. Im Ausführungsbeispiel nach Fig. 8 verlaufen die dicken Fadenelemente 4 in Längsrichtung ohne große lokale Krümmung. Im Wesentlichen verlaufen die dicken Fadenelemente 4 über ihre gesamte Längserstreckung nahezu geradlinig. Über die gesamte Längserstreckung der Fadenelemente 4 kann auch eine leichte Krümmung vorgesehen sein. Insbesondere sind die dicken Fadenelemente 4 in den Kreuzungsbereichen mit den dünnen Fadenelementen 5 nicht so gekrümmt, dass sich ihr Verlauf an den Verlauf der kreuzenden dünnen Fadenelemente 4 anpasst.

Wie insbesondere in den Fig. 2, 3, 10, 16, 19 und 20 dargestellt, besitzt das Filterbauteil 1 einen Rahmen 7. Der Rahmen 7 fasst das Gewebe 70 ein. Wie in Fig. 4a oder 4b dargestellt, ist das Filterbauteil 1 dazu vorgesehen, dass es von Kühlluft in einer Durchströmungsrichtung 50 durchströmt wird. Die Durchströmungsrichtung 50 verläuft quer, insbesondere senkrecht zur Fläche des Gewebes 70, insbesondere zur Fläche des Stützgewebes 20 und/oder des Filtergewebes 30, bzw. des Stützfiltergewebes 40. Im eingebauten Zustand des Filterbauteils 1 steht die Durchströmungsrichtung 50 quer, insbesondere senkrecht auf die Außenseite 3 des Arbeitsgeräts 2. Es kann auch vorgesehen sein, dass die Durchströmungsrichtung 50 senkrecht zu einer Werkzeugebene des Werkzeugs 10 verläuft. Der Rahmen 7, insbesondere ein Umfangsrahmen 19 des Rahmens 7, läuft geschlossen um die Durchströmungsrichtung 50 um. Der Umfangsrahmen 19 fasst das Gewebe 70 an einem Rand 78 des Gewebes 70 ein. Der Rahmen 7 begrenzt das Gewebe 70 bezüglich der Durchströmungsrichtung 50 der Kühlluft von beiden Seiten des Gewebes 70 her. Insbesondere begrenzt der Rahmen 7 eine Baugruppe, insbesondere eine Baueinheit, aus Filtergewebe 30 und Stützgewebe 20, insbeondere und weiterem Stützgewebe 60, bezüglich der Durchströmungsrichtung 50 der Kühlluft von beiden Seiten der Baugruppe, insbesondere Baueinheit, her. In den Ausführungsbeispielen ist der Rahmen 7 mittels Spritzgießen um das Gewebe 70, insbesondere um das Filtergewebe 30 und das Stützgewebe 20, insbesondere und das weitere Stützgewebe 60, insbesondere um dessen Rand, gespritzt. Der Rand des Gewebes 70, insbesondere der Baugruppe, insbesondere der Baueinheit, aus Filtergewebe 30 und Stützgewebe 20, ist dann in dem Rahmen 7 aufgenommen.

Der Rahmen 7 steht in Richtung zur Außenseite 3 hin über das Gewebe 70 vor. Dadurch ist das Gewebe 70 zumindest ein Stück weit vor mechanischen Belastungen geschützt. Das Filterbauteil 1 besitzt eine in Durchströmungsrichtung 50 gemessene Gesamthöhe b1 (beispielhaft für alle Ausführungsbeispiele in den Fig. 4a und 4b dargestellt). Der Rahmen 7 besitzt einen Punkt größten Abstands b2 zu dem Gewebe 70, wobei der größte Abstand b2 in Durchströmungsrichtung 50 gemessenen ist. In den Ausführungsbeispielen gibt es einen um die Durchströmungsrichtung 50 umlaufenden Bereich 26 des Rahmens 7, der den größten Abstand b2 zu dem Gewebe 70 aufweist. Der Abstand b2 beträgt mindestens 50%, insbesondere mindestens 60%, der Gesamthöhe b1 des Filterbauteils 1.

Das Filterbauteil 1 weist in den Ausführungsbeispielen mindestens eine Verbindungsrippe 8, 9, insbesondere mindestens zwei Verbindungsrippen 8, 9 auf. Die mindestens eine Verbindungsrippe 8, 9 ist auf den dünnen Fadenelementen 5 und/oder den dicken Fadenelementen 4 angeordnet. Die mindestens eine Verbindungsrippe 8, 9 ist zur Anordnung auf der Außenseite 3 des Arbeitsgeräts 2 vorgesehen. Im eingebauten Zustand des Filterbauteils 1 bildet die mindestens eine Verbindungsrippe 8, 9 einen Teil der Außenseite 3 des Arbeitsgeräts 2. Wie in Fig. 2 dargestellt, verbindet die mindestens eine Verbindungsrippe 8, 9 zwei sich einander gegenüberliegende Stellen des Umfangsrahmens 19.

Das Filterbauteil 1 besitzt eine senkrecht zur Durchströmungsrichtung 50 gemessene größte Ausdehnung g. Mindestens zwei Verbindungsrippen 8 und 9 besitzen einen Bereich z, wie in Fig. 2 eingezeichnet. Die in Längsrichtung der Verbindungsrippe 8 und/oder der Verbindungsrippe 9 gemessene Länge des Bereichs z beträgt mindestens 20%, insbesondere mindestens 30% der größten Ausdehnung g des Filterbauteils 1. Im Bereich z verlaufen die mindestens zwei Verbindungsrippen 8, 9 kreuzungsfrei. Im Bereich z sind die mindestens zwei Verbindungsrippen 8 und 9 getrennt voneinander ausgebildet. Im Bereich z schneiden sich die mindestens zwei Verbindungsrippen 8 und 9 nicht. Im Bereich z kontaktieren sich die mindestens zwei Verbindungsrippen 8 und 9 nicht. Im Bereich z verläuft keine Rippe quer zu den Verbindungsrippen 8 und 9. In den Ausführungsbeispielen verlaufen die Verbindungsrippen 8 und 9 im Wesentlichen parallel zueinander. Der Raum zwischen den mindestens zwei Rippen 8 und 9 ist im Bereich z frei von quer zu den mindestens zwei Rippen 8 und 9 verlaufenden Querrippen.

Wie in Fig. 5 beispielhaft für die Verbindungsrippe 9 dargestellt, schließen die mindestens zwei Verbindungsrippen 8, 9 mindestens einen Teil der dicken Fadenelemente 4 (in Fig. 5 im Stützgewebe 20 enthalten) und mindestens einen Teil der dünnen Fadenelemente 5 (in Fig. 5 in dem Filtergewebe 30 enthalten) bezüglich der Durchströmungsrichtung 50 der Kühlluft von beiden Seiten ein.

Wie in Fig. 1 dargestellt, ist das Filterbauteil 2 durch das einzige Befestigungselement 12 an dem Grundkörper 11 des Arbeitsgeräts befestigbar. Das Befestigungselement 12 ist das einzige Bauteil, mittels dem das Filterbauteil 2 an dem Grundkörper 11 befestigt ist. Das Befestigungselement 12 ist zentral auf dem Filterbauteil 1 angeordnet. Das Befestigungselement 12 ist in einem insbesondere in Richtung senkrecht zur Durchströmungsrichtung 50 gemessenen Abstand zu dem Umfangsrahmen 19 auf dem Filterbauteil 1 angeordnet. Das Befestigungselement 12 ist in einem insbesondere in Richtung senkrecht zur Durchströmungsrichtung 50 gemessenen Abstand zu dem Rand 78 des Gewebes 70 in der Fläche des Gewebes 70 angeordnet. Insbesondere ist das Befestigungselement 12 in der Seitenansicht senkrecht auf die Werkzeugebene des Werkzeugs 10 (Fig. 1) in etwa in der Mitte des Filterbauteils 1, insbesondere der Mitte des Gewebes 70, insbesondere im Flächenschwerpunkt der der Filteraußenkontur 28 zugeordneten Fläche, befestigbar.

Das Befestigungselement 12 durchdringt das Gewebe 70 in Durchströmungsrichtung 50 vollständig. In den Ausführungsbeispielen ist das Befestigungselement 12 im Bereich einer Verbindungsrippe angeordnet, wie beispielsweise in Fig. 2 dargestellt. Das Befestigungselement 12 durchdringt die Verbindungsrippe in Durchströmungsrichtung 50 vollständig. In den Ausführungsbeispielen ist das Befestigungselement 12 eine Schraube. Die Schraube ist durch das Filterbauteil 1 hindurch in den Grundkörper 11 des Arbeitsgeräts 2 eingeschraubt. Hierbei wird das Filterbauteil 1 gegen den Grundkörper 11 gedrückt.

Zur Befestigung des Filterbauteils 1 an dem Grundkörper 11 mittels des Befestigungselements 12 ist das Filterbauteil 1 während der Befestigung in einer Befestigungsrichtung 49 an den Grundkörper 11 annäherbar. Die Befestigungsrichtung 49 ist in Fig. 2 dargestellt. In den Ausführungsbeispielen ist die Befestigungsrichtung 49 verläuft die Befestigungsrichtung 49 in dieselbe Richtung wie die Durchströmungsrichtung 50. Die Befestigungsrichtung 49 verläuft quer, insbesondere senkrecht zur Fläche des Gewebes 70, insbesondere zur Fläche des Stützgewebes 20 und/oder des Filtergewebes 30, bzw. des Stützfiltergewebes 40. Im eingebauten Zustand des Filterbauteils 1 steht die Befestigungsrichtung 49 quer, insbesondere senkrecht auf die Außenseite 3 des Arbeitsgeräts 2. Das Befestigungselement 12 befestigt das Filterbauteil 1 bezüglich der Befestigungsrichtung 49 am Grundkörper 11.

Im befestigten Zustand des Filterbauteils 1 bildet das Filterbauteil 1 einen Teil der Außenseite 3 des Arbeitsgeräts. Durch das Filterbauteil 1 kann dann Kühlluft in Durchströmungsrichtung 50 von außen in den Innenbereich 6 des Arbeitsgeräts 2 strömen.

Das Außengehäuse des Grundkörpers 11 besitzt in einer Seitenansicht senkrecht auf die Werkzeugebene des Werkzeugs 10 eine Gehäuseaußenkontur 27, wie in Fig. 1 dargestellt. Die Gehäuseaußenkontur 27 begrenzt in einer gedachten Projektion auf die Werkzeugebene eine gedachte Gehäusefläche. Die Projektion erfolgt in Richtung senkrecht zur Werkzeugebene. Das Filterbauteil 1, insbesondere das Gewebe 70, besitzt in einer gedachten Projektion auf die Werkzeugebene eine Filteraußenkontur 28. Die Projektion erfolgt in Richtung senkrecht zur Werkzeugebene. Die Filteraußenkontur 28 begrenzt eine gedachte Filterfläche in der Werkzeugebene. Die Filterfläche beträgt mindestens 5%, insbesondere mindestens 10%, insbesondere mindestens 15%, insbesondere mindestens 18% der Gehäusefläche. Dadurch nimmt das Filterbauteil 1 in Seitenansicht einen großen Teil der Außenseite 3 des Arbeitsgeräts 1 ein. Das Filterbauteil 1 ist in Relation zu aus dem Stand der Technik bekannten Filterbauteilen groß. Bei der Befestigung mit nur einem einzigen Befestigungselement 12 kann es absolut gesehen aufgrund der großen Größe des Filterbauteils 1 zu einem starken Verzug des Filterbauteils 1 kommen. Das Filterbauteil 1 kann mit seinem Rand an einer Stelle am Grundkörper 11 anliegen und an anderer, insbesondere gegenüberliegender Stelle, nicht.

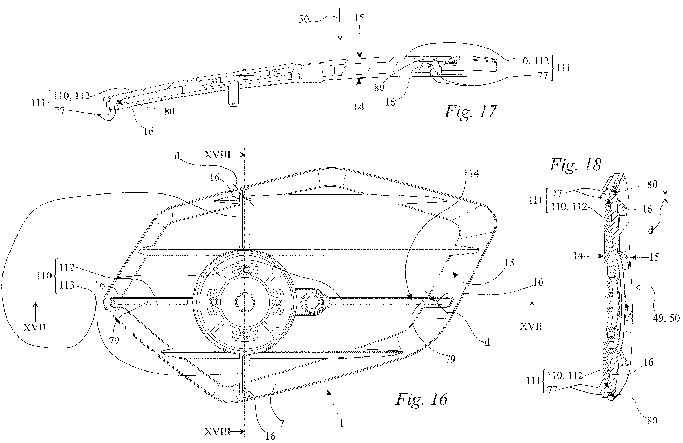

Wie in den Fig. 16 bis 19 und 22 dargestellt ist zwischen dem Filterbauteil 1, insbesondere dem Rahmen 7 des Filterbauteils 1, und dem Grundkörper 11 ein Dichtelement 77 angeordnet. Obwohl die Fig. 16 bis 23 ein alternatives Ausführungsbeispiel zeigen, gilt dies für alle Ausführungsbeispiele und wird nachstehend am Beispiel des Ausführungsbeispiels der Fig. 16 bis 23 für alle Ausführungsbeispiele zutreffend näher beschrieben.

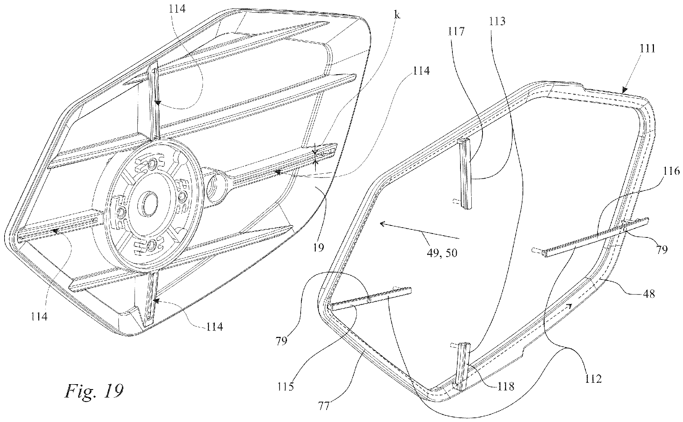

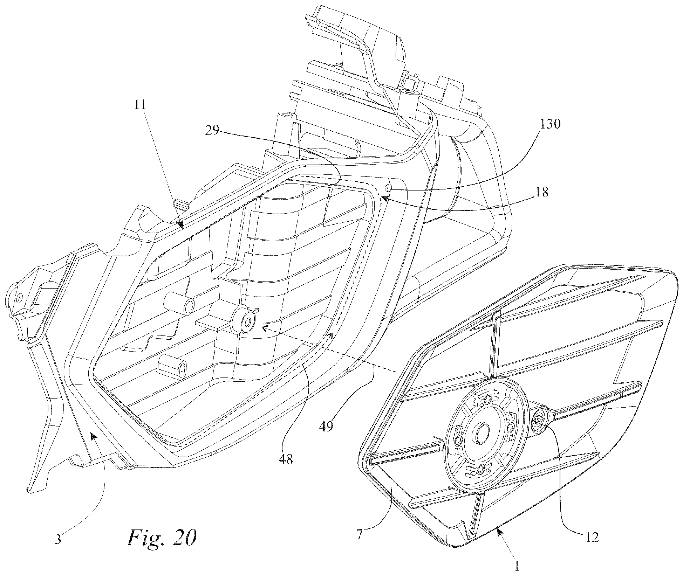

Das Dichtelement 77 dient zur Abdichtung zwischen dem Grundkörper 11 und dem Filterbauteil 1, insbesondere dem Rahmen 7 des Filterbauteils 1, gegen ein Ein- oder Austreten von Luft. Das Dichtelement 77 ist aus Elastomer, insbesondere aus thermoplastischem Elastomer. Das Dichtelement 77 läuft entlang einer in den Fig. 19 und 20 dargestellten Umlaufrichtung 48, insbesondere geschlossen, um. Die Durchströmungsrichtung 50 und/oder die Befestigungsrichtung 49 verläuft quer, insbesondere senkrecht, zur Umlaufrichtung 48. In Ansicht in Durchströmungsrichtung 50 und/oder in Befestigungsrichtung 49 läuft das Dichtelement 77 geschlossen um das Befestigungselement 12 um. Das Befestigungselement 12 ist in etwa in der Mitte des geschlossen umlaufenden Dichtelements 77 angeordnet. Das Dichtelement 77 läuft geschlossen um die Durchströmungsrichtung 50 und/oder die Befestigungsrichtung 49 um.

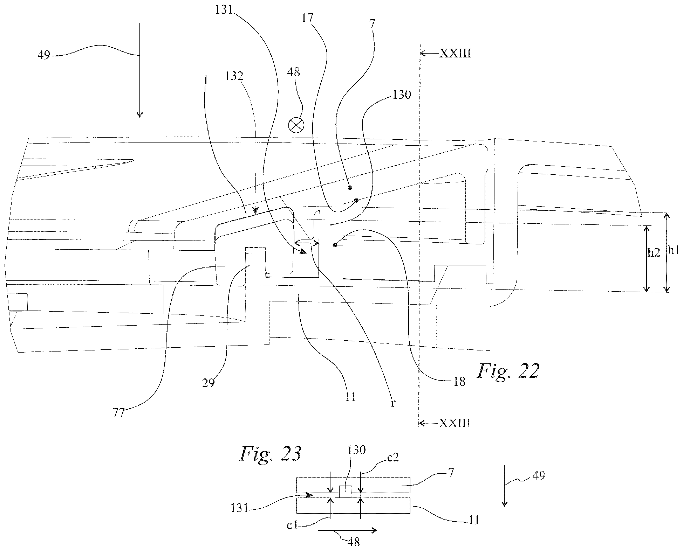

Das Dichtelement 77 ist in Befestigungsrichtung 49 zwischen dem Filterbauteil 1, insbesondere dem Rahmen 7, und dem Grundkörper 11 verformbar, insbesondere elastisch verformbar, insbesondere komprimierbar, insbesondere elastisch komprimierbar. Bei der Befestigung des Filterbauteils 1 an dem Grundkörper 11 kann es erforderlich sein, großen Druck auf das Filterbauteil 1 mittels des Befestigungselements 12 auszuüben, damit das Dichtelement 77 überall zwischen dem Filterbauteil 1, insbesondere dem Rahmen 7, und dem Grundkörper 11 abdichtet und ein möglicher Verzug des Filterbauteils 1, insbesondere des Grundkörpers 11, ausgeglichen wird. Um hierbei eine ungewünscht große , insbesondere elastische, Komprimierung, insbesondere Verformung, des Dichtelements 77 zu vermeiden, umfasst das Arbeitsgerät 2 mindestens ein Anschlagelement 130, wie in Fig. 23 dargestellt.

In den Ausführungsbeispielen ist das Gewebe 70 zumindest teilweise, insbesondere vollständig aus Metall. Der Rahmen 7 ist aus Kunststoff.

Das mindestens eine Anschlagelement 130 ist zwischen dem Grundkörper 11 und dem Rahmen 7 angeordnet. Eine Annäherung von Rahmen 7 und Grundkörper 11 in Befestigungsrichtung 49 während der Befestigung des Filterbauteils 1 an dem Grundkörper 11 ist durch das Anschlagelement 130 begrenzt. Dadurch ist eine ungewünschte Verformung, insbesondere Komprimierung, des Dichtelements 77 im Bereich des Anschlagelements 130 vermieden. Das Anschlagelement 130 überbrückt einen Spalt 131 zwischen dem Grundkörper 11 und dem Rahmen 7. Insbesondere überbrückt das Anschlagelement den Spalt 131 lokal. Der Spalt 131 ist in Fig. 22 und 23 dargestellt. Das Anschlagelement 130 überbrückt den Spalt 131 zwischen dem Grundkörper 11 und dem Rahmen 7 insbesondere bezüglich der Umlaufrichtung 48 lokal begrenzt. Insbesondere erstreckt sich das Anschlagelement 130 bezüglich der Umlaufrichtung 48 des Dichtelements 77 lediglich über einen lokalen Teilbereich eines vollen Umlaufs. Der Teilbereich entspricht insbesondere einem Winkelbereich von < 20° bezüglich eines Umlaufs um das Befestigungselement 12. Insbesondere ist der Winkelbereich > 0,5°. Insbesondere überbrückt das Anschlagelement 130 den Spalt 131 zwischen dem Rahmen 7 und dem Grundkörper 11 derart, dass in Umlaufrichtung 48 vor dem Anschlagelement 130 ein in Befestigungsrichtung 49 gemessener erster Abstand c1 zwischen dem Rahmen 7 und dem Grundkörper 11 ausgebildet ist und dass in Umlaufrichtung 48 nach dem Anschlagelement 130 ein zweiter in Befestigungsrichtung 49 gemessener Abstand c2 ausgebildet ist. Im Ausführungsbeispiel sind der erste Abstand c1 und der zweite Abstand c2 gleich groß.

Insbesondere begrenzt das mindestens eine Anschlagelement 130 eine, insbesondere elastische, Komprimierung, insbesondere Verformung, des Dichtelements 77 in Befestigungsrichtung 49. Sowohl der Rahmen 7 als auch der Grundkörper 11 sind härter als das Dichtelement 77. Das Dichtelement 77 ist elastisch. In den Ausführungsbeispielen ist das Dichtelement 77 ein thermoplastisches Elastomer.

Das Dichtelement 77 weist an einer in Fig. 22 dargestellten Komprimierungsstelle 132 zwischen dem Rahmen 7 und dem Grundkörper 11 im vollständig komprimierten, insbesondere verformten, Zustand eine in Befestigungsrichtung 49 gemessene Komprimierungshöhe h2 auf. Das Dichtelement 77 weist im unkomprimierten Zustand an derselben Komprimierungsstelle 132 eine in derselben Richtung 49 gemessene Dichtelementhöhe h2 auf. Der unkomprimierte Zustand wird auch als unverformter Zustand bezeichnet. Insbesondere begrenzt das mindestens eine Anschlagelement 130 die Komprimierung, insbesondere Verformung, des Dichtelements 77 in Befestigungsrichtung 49 an der Komprimierungsstelle 132 derart, dass die Komprimierungshöhe h2 mindestens 50%, insbesondere mindestens 70%, insbesondere mindestens 80%, insbesondere mindestens 90%, insbesondere mindesten 95% der Dichtelementhöhe h1 beträgt. Es kann vorgesehen sein, dass das Dichtelement 77 während der Befestigung des Filterbauteils 1 an dem Grundkörper 11 mittels des Befestigungselements 12 an der Komprimierungsstelle 132 von der Dichtelementhöhe h2 auf die Dichtelementhöhe h1 komprimiert, insbesondere verformt, wird. Das Anschlagelement 130 begrenzt die Komprimierung, insbesondere Verformung, des Dichtelements 77 an der Komprimierungsstelle 132 auf die Komprimierungshöhe h2.

Wie insbesondere in Fig. 22 ersichtlich ist das Dichtelement 77 in einem Schnitt quer, insbesondere senkrecht, zur Umlaufrichtung 48 im Wesentlichen U-förmig. Das offene Ende des Us zeigt dabei in Befestigungsrichtung 49, auf den Grundkörper 11 zu. Die beiden Schenkel des U umgreifen einen in Richtung entgegen der Befestigungsrichtung 49 auf das Filterbauteil 1 vorstehenden Steg 29. Mindestens ein Schenkel liegt an dem Steg 29 an. Wie in Fig. 20 dargestellt läuft der Steg 29 in Umlaufrichtung 48 geschlossen um das Befestigungselement 12 um. Das Dichtelement 77 bildet eine umlaufende Nut zur Aufnahme des Stegs 29. Für eine Abdichtung zwischen Rahmen 7 und Grundkörper 11 ist es nicht erforderlich, dass der Nutgrund dieser Nut an dem Steg 29 anliegt. Es genügt, dass mindestens eine der beiden Nutflanken der Nut an dem Steg 29, insbesondere umlaufend, anliegt.

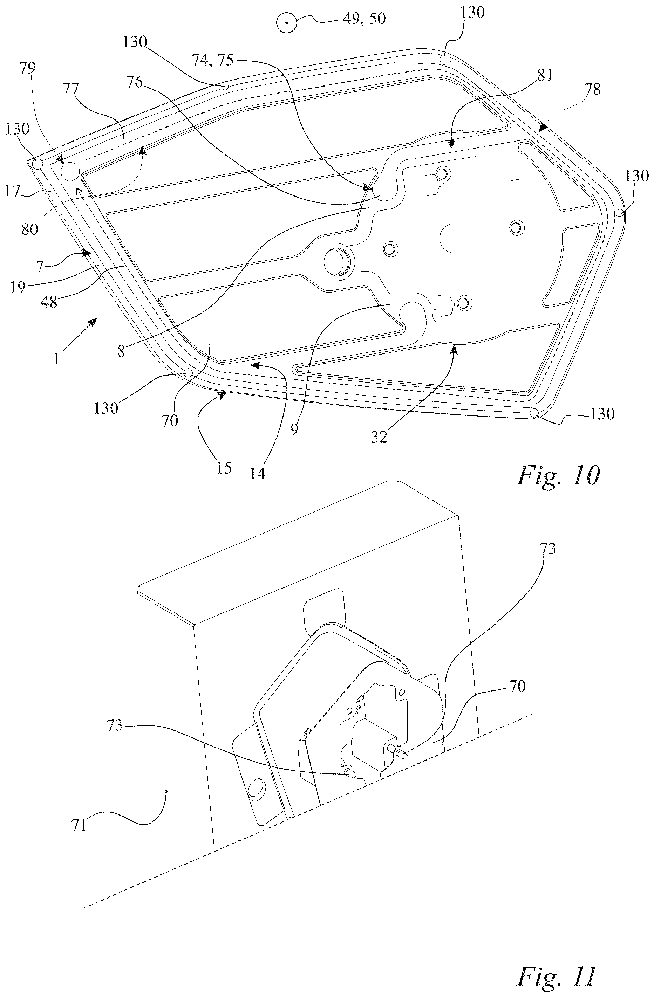

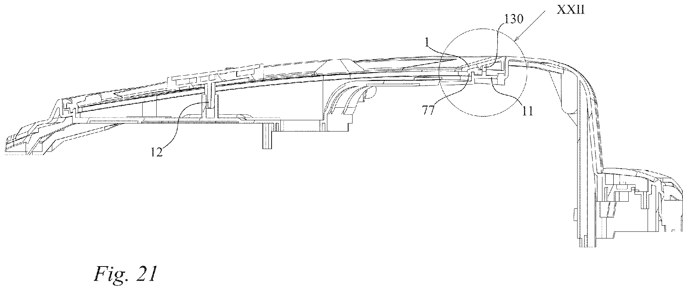

Wie in Fig. 10 dargestellt besitzt der Rahmen 7 eine in Umlaufrichtung 48, insbesondere geschlossen, umlaufende Rahmenkante 17. Wie in Fig. 20 dargestellt besitzt der Grundkörper 11 eine in Umlaufrichtung 48, insbesondere geschlossen, umlaufende Grundkörperfläche 18. Die Grundkörperfläche 18 wird in den Ausführungsbeispielen auch als Grundkörperringfläche bezeichnet. Insbesondere steht das mindestens eine Anschlagelement 130 in Befestigungsrichtung 49 über die Rahmenkante 17 und/oder in Richtung entgegen der Befestigungsrichtung 49 über die Grundkörperfläche 18 vor. Im Ausführungsbeispiel nach Fig. 10 ist das mindestens eine Anschlagelement 130 am Rahmen 7 des Filterbauteils 1 festgelegt. Es kann aber auch vorgesehen sein, dass das mindestens ein Anschlagelement 130 am Grundkörper 11 des handgeführten Arbeitsgeräts 2 oder - wie im Ausführungsbeispiel gemäß der Fig. 20 und 21 - sowohl am Grundkörper 11 als auch am Rahmen 7 festgelegt ist. Wenn das mindestens eine Anschlagelement 130 sowohl am Rahmen 7 als auch am Grundkörper 11 festgelegt ist, ist das Anschlagelement 130 teilbar.

In den Ausführungsbeispielen ist das mindestens eine Anschlagelement 130 materialeinheitlich, insbesondere monolithisch, mit dem Rahmen 7 ausgebildet. Das mindestens eine Anschlagelement 130 ist materialeinheitlich mit dem Rahmen 7 ausgebildet. Das mindestens eine Anschlagelement 130 ist aus Kunststoff.

In den Ausführungsbeispielen ist das mindestens eine Anschlagelement 130 als Zapfen ausgebildet. Der Zapfen hat einen, insbesondere quer, insbesondere senkrecht zur Befestigungsrichtung 49, insbesondere senkrecht zur Durchströmungsrichtung 50 gemessenen, Durchmesser. Der Durchmesser des Zapfens beträgt von 1 mm bis 6 mm, insbesondere von 2 mm bis 5 mm.

Bei der Befestigung des Filterbauteils 1 am Grundkörper 11 schlägt das Filterbauteil 1 in den Ausführungsbeispielen mit dem Anschlagelement 130 an dem Grundkörper 11, insbesondere an der Grundkörperfläche 18 an.

Ein in Richtung senkrecht zur Befestigungsrichtung 49 gemessener Abstand r zwischen dem Dichtelement 77 und dem mindestens einen Anschlagelement 130 ist kleiner als die fünffache, insbesondere die dreifache, insbesondere die einfache Dichtelementhöhe h1. Der Abstand r ist in Richtung senkrecht zur Umlaufrichtung 48 gemessen. Im Ausführungsbeispiel ist der Abstand r größer als 10% der Dichtelementhöhe h1. Es kann aber auch vorgesehen sein, dass kein Abstand zwischen dem Dichtelement 77 und dem mindestens einen Anschlagelement 130 besteht.

Wie in Fig. 10 dargestellt sind insbesondere mindestens zwei, insbesondere mehrere Anschlagelemente 130 vorgesehen, die zueinander bezüglich der Umlaufrichtung 48 beabstandet sind. Im Ausführungsbeispiel haben zumindest zwei der mindestens zwei Anschlagelemente 130 einen in Umlaufrichtung 48 gemessenen Winkelabstand von mindestens 135° zueinander. Im Ausführungsbeispiel insgesamt sechs Anschlagelemente 130 vorgesehen. In alternativer Ausführung kann auch nur ein einziges Anschlagelement 130 vorgesehen sein.

Während der Befestigung des Filterbauteils 1 an dem Grundkörper 11 wird das Filterbauteil 1 mittels eines Befestigungselements 12 in Befestigungsrichtung 48 an den Grundkörper 11 angenähert. In den Ausführungsbeispielen wird hierbei das als Schraube ausgebildete Befestigungselement 12 in den Grundkörper 11 geschraubt. Die Annäherung von Rahmen 7 und Grundkörper 11 bezüglich der Befestigungsrichtung 48 wird während der Befestigung des Filterbauteils 1 an dem Grundkörper 11 durch das mindestens eine Anschlagelement 130 begrenzt.

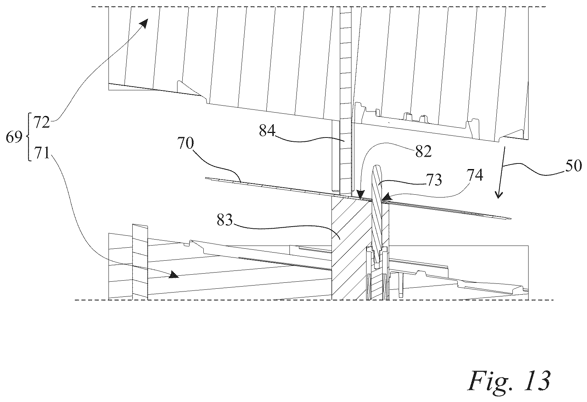

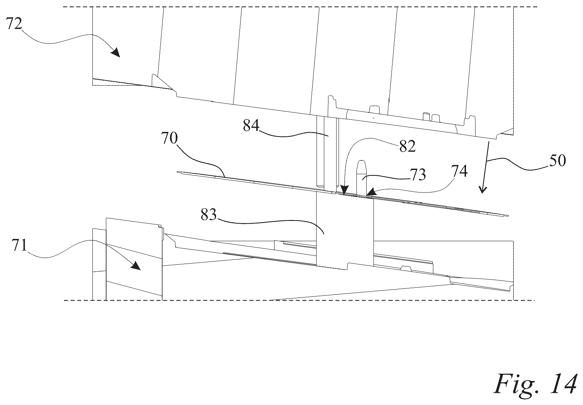

Das Filterbauteil 1 nach Fig. 10 wird in einem in den Fig. 11 bis 15 (insbesondere Fig. 13) dargestellten Gusswerkzeug 69, insbesondere in einem Spritzgusswerkzeug, hergestellt. Zunächst wird ein Probefilterbauteil ohne Anschlagelemente 130 in dem Gusswerkzeug 69 hergestellt. Das Probefilterbauteil wird an dem Grundkörper 11 des Arbeitsgeräts 2 befestigt, um festzustellen, an welcher Stelle und in welcher Form das mindestens eine Anschlagelement 130 benötigt wird. Anschließend wird das Gusswerkzeug 69 so modifiziert, dass bei dem nachfolgenden Herstellen des Filterbauteils 1 in dem modifizierten Gusswerkzeug 69 das mindestens eine Anschlagelement 130 während eines Gussverfahrensschritts, insbesondere eines Spritzgussverfahrensschritts, entsteht. Nachfolgend wird das modifizierte Gusswerkzeug 69 zur Herstellung weiterer Filterbauteile 1 genutzt. Eine erneute Modifizierung des Gusswerkzeugs 69 ist nicht erforderlich. Eine einmalige Modifikation des Gusswerkzeugs 69 reicht aus, um anschließend viele Filterbauteile 1 herzustellen. Die Filterbauteile 1 passen dann auf Grundkörper 11, die alle mit demselben Grundkörpergusswerkzeug hergestellt wurden, auf das das modifizierte Gusswerkzeug 69 angepasst ist.

Eine Modifikation des Gusswerkzeugs 69 kann im Ausfräsen einer Vertiefung im Gusswerkzeug 69, insbesondere in einer der beiden oder beiden Werkzeughälften 71 und 72 des Gusswerkzeugs 69 und/oder im Anbringen eines Vorsprungs an dem Gusswerkzeug 69, insbesondere an einer der beiden oder beiden Werkzeughälften 71 und 72 des Gusswerkzeugs 69, bestehen. Es können Modifikationen an mehreren Stellen vorgesehen sein.

Wie in Fig. 1 dargestellt besitzt das Werkzeug 10, insbesondere die Führungsschiene 21 eine Längsmittelachse 13. Die Längsmittelachse 13 ist im Ausführungsbeispiel in Ansicht in Durchströmungsrichtung 50 der Kühlluft blickend zwischen den mindestens zwei Verbindungsrippen 8 und 9 angeordnet. Im Ausführungsbeispiel ist die Längsmittelachse 13 in Ansicht in Durchströmungsrichtung 50 der Kühlluft blickend zwischen der Verbindungsrippe 8 und der Verbindungsrippe 9 angeordnet.

Gemäß des alternativen Ausführungsbeispiels nach den in den Fig. 16 bis 23, umfasst das Filterbauteil 1 eine Peilelement 110. Das Peilelement 110 ist als Peilhilfe zur Ausrichtung des Arbeitsgeräts 2, insbesondere zur Ausrichtung des Werkzeugs 10 des Arbeitsgeräts 2, insbesondere der Führungsschiene 21, vorgesehen. Bei am Grundkörper 11 montiertem Filterbauteil 1 ist das Peilelement 110 in einem Abstand zu dem Werkzeug 10 angeordnet. Auch wenn das Werkzeug 10 verdeckt ist, beispielsweis durch ein Werkstück oder in einem zu bearbeitenden Werkstück steckt, kann über das Peilelement 110 die Orientierung und Position des Werkzeugs 10 bestimmt werden. Das Peilelement 110 ist Teil der Außenseite 3 des Arbeitsgeräts 2. Das Peilelement 110 ist auf dem Rahmen 7 des Filterbauteils 1 angeordnet.

Das Peilelement 110 und das Dichtelement 77 sind materialeinheitlich miteinander ausgebildet. Das Peilelement 110 und das Dichtelement 77 sind miteinander monolithisch als Peil- und Dichtelement 111 ausgebildet. Dies ist insbesondere in Fig. 19 ersichtlich. Das Peilelement 110 und das Dichtelement 77 sind miteinander zusammenhängend als Peil- und Dichtelement 111 ausgebildet. Das Peilelement 110 und das Dichtelement 77 sind in einem einzigen Verfahrensschritt, insbesondere Gussverfahrensschritt, insbesondere Spritzgussverfahrensschritt, gemeinsam hergestellt.

Sowohl das Peilelement 110 als auch das Dichtelement 77 sind aus einem thermoplastischen Elastomer.

Wie in Fig. 17 dargestellt besitzt das Filterbauteil 1 eine in Einbaulage des Filterbauteils 1 dem Grundkörper 11 zugewandte Innenseite 14 und eine in Einbaulage des Filterbauteils 1 dem Grundkörper 11 abgewandte Außenseite 15. Mindestens eine Durchflussöffnung 16 durchdringt das Filterbauteil 1 von der Innenseite 14 bis zur Außenseite 15 vollständig. Die Position der mindestens einen Durchflussöffnung 16 ist in Fig. 16 schematisch mit gepunkteter Kreislinie eingezeichnet. Die Durchflussöffnung 16 durchdringt das Filterbauteil 1, insbesondere den Rahmen 7 des Filterbauteils 1 in Durchströmungsrichtung 50 vollständig. Durch die Durchflussöffnung 16 kann während eines Gussverfahrensschritts, insbesondere während eines Spritzgussverfahrensschritts, insbesondere während eines Kunststoffspritzgussverfahrensschritts, Material, insbesondere Kunststoffmaterial fließen. Es sind mindestens zwei Durchflussöffnungen 16, in den Ausführungsbeispielen vier Durchflussöffnungen 16 vorgesehen.

Das Peil- und Dichtelement 111 erstreckt sich durch die Durchflussöffnung 16 hindurch. Das Peil- und Dichtelement 111 füllt die Durchflussöffnung 16 vollständig aus.

Wie in den Fig. 17 und 18 dargestellt weist der Rahmen 7 an der Innenseite 14 des Filterbauteils 1 einen Kanal 80 zur Aufnahme des Dichtelements 11 auf. Der Rahmen 7 weist an der Außenseite 15 des Filterbauteils 1 einen Peilelementkanal 114 zur Aufnahme des Peilelements 110 auf. Der Kanal 80 besitzt die Form einer Nut. Während des Spritzgussverfahrensschritts ist die offene Längsseite der Nut des Kanals 80 einer in Fig. 13 dargestellten zweiten Werkzeughälfte 72 des Gusswerkzeugs 69 zugewandt. Der Peilelementkanal 114 besitzt die Form einer Nut. Während des Spritzgussverfahrensschritts ist die offene Längsseite der Nut des Peilelementkanals 114 einer in Fig. 13 dargestellten ersten Werkzeughälfte 71 des Gusswerkzeugs 69 zugewandt.

Die Durchflussöffnung 16 verbindet den Kanal 80 und den Peilelementkanal 114 miteinander. Während des Gussverfahrensschritts, insbesondere während des Spritzgussverfahrensschritts, insbesondere während des Kunststoffspritzgussverfahrensschritts kann Material, insbesondere Kunststoff durch den Peilelementkanal 114 auf der Außenseite 15 des Filterbauteils 1 zu der Durchflussöffnung 16 und durch die Durchflussöffnung 16 hindurch in den Kanal 80 auf der Innenseite 14 des Filterbauteils 1 fließen. Die Durchflussöffnung 16 ist ein Verbindungsloch im Rahmen 7 zur Verbindung der Innenseite 14 mit der Außenseite 15. Das Peilelement 110 und das Dichtelement 77 werden in einem einzigen Gussverfahrensschritt, insbesondere einem einzigen Spritzgussverfahrensschritt, insbesondere einem einzigen Kunststoffspritzgussverfahrensschritt, gegossen. Hierbei wird das Peil- und Dichtelement 111 ausgebildet. Insbesondere wird das Peil- und Dichtelement 111 hierbei monolithisch ausgebildet.

Der Peilelementkanal 114 besitzt eine, insbesondere in Richtung senkrecht zur Befestigungsrichtung 49, insbesondere zur Durchströmungsrichtung 50 gemessene, Kanalbreite k, wie in Fig. 19 dargestellt. Die Durchflussöffnung 116 besitzt einen in Fig. 18 oder 17 dargestellten Durchmesser d. Der Durchmesser d ist insbesondere in Richtung senkrecht zur Befestigungsrichtung 49, insbesondere zur Durströmungsrichtung 50 gemessen. In den Ausführungsbeispielen beträgt der Durchmesser d der Durchflussöffnung 116 mindestens 60%, insbesondere mindestens 70%, insbesondere mindestens 80%, der Kanalbreite k. Insbesondere beträgt der Durchmesser d der Durchflussöffnung mindestens 0,5 mm, insbesondere mindestens 1 mm. Dadurch ist die Durchflussöffnung 116 groß genug, dass das Material gut durch sie hindurchfließen kann. Insbesondere beträgt der Durchmesser d der Durchflussöffnung 116 höchstens 4 mm, insbesondere höchstens 3 mm. Dadurch ist die Durchflussöffnung 116 klein genug, um sie unter Verwendung von wenig Material gut füllen zu können.

Das Peilelement 110 ist auf der Außenseite 15 des Filterbauteils 1 angeordnet. Das Dichtelement 77 ist auf der Innenseite 14 des Filterbauteils 1 angeordnet. Der Grundkörper 11 und das Peilelement 110 kontrastieren farblich zueinander. Der Grundkörper 11 weist an seiner Außenseite 3 eine andere Farbe auf als das Peilelement 110. Der Rahmen 7 und das Peilelement 110 kontrastieren zueinander. Unmittelbar benachbart zu dem Peilelement 110 weist der Rahmen 7 eine andere Farbe auf als das Peilelement 110 an dieser Stelle. Insbesondere ist das Peilelement 110 einfarbig. Insbesondere ist der Rahmen 7 einfarbig.

Das Werkzeug 10 besitzt eine Längserstreckung. Die Längserstreckung des Werkzeugs 10 verläuft entlang der Längsmittelachse 13 des Werkzeugs 10, insbesondere der Führungsschiene 21. Das Peilelement 110 weist eine Stechleiste 112 und/oder eine Fällleiste 113 auf. Im Ausführungsbeispiel weist das Peilelement 110 sowohl eine Stechleiste 112 als auch eine Fällleiste 113 auf. Die Stechleiste 112 erstreckt sich in Einbaulage des Filterbauteils 1 im Wesentlichen in Richtung der Längserstreckung, insbesondere in Richtung der Längsmittelachse 13. Die Fällleiste 113 erstreckt sich in Einbaulage des Filterbauteils 1 in Richtung quer, insbesondere senkrecht, zur Richtung der Längserstreckung, insbesondere zur Richtung der Längsmittelachse 13. Dies gilt insbesondere für eine Ansicht auf das Arbeitsgerät 2 in Durchströmungsrichtung 50. Dies gilt insbesondere für eine Ansicht senkrecht auf die Werkzeugebene des Werkzeugs 10.

Die Stechleiste 112 weist insbesondere einen ersten Stechleistenabschnitt 115 und einen zweiten Stechleistenabschnitt 116 auf. Der erste Stechleistenabschnitt 115 und der zweite Stechleistenabschnitt 116 sind in Ansicht in Durchströmungsrichtung 50 insbesondere beanstandet zueinander ausgebildet.

Die Fällleiste 113 weist insbesondere einen ersten Fällleistenabschnitt 117 und einen zweiten Fällleistenabschnitt 118 auf. Der erste Fällleistenabschnitt 117 und der zweite Fällleistenabschnitt 118 sind in Ansicht in Durchströmungsrichtung 50 insbesondere beanstandet zueinander ausgebildet.

Die materialeinheitliche, insbesondere monolithische, Ausgestaltung der Stechleiste 112 des Peilelements 110 und der Fällleiste 113 des Peilelements 110 auf der Außenseite 15 des Filterbauteils 1 ist nicht erkennbar. In Ansicht auf die Außenseite 15 des Filterbauteils 1 in Durchströmungsrichtung 50 erscheint es, als ob es sich bei der Fällleiste 113 und der Stechleiste 112 um getrennt voneinander ausgebildete Bauelemente handelt. Eine Verbindung zwischen der Stechleiste 112 und der Fällleiste 113 ist von außen nicht erkennbar. Die Stechleiste 112 und die Fällleiste 113 sind derart angeordnet, dass die materialeinheitliche, insbesondere monolithische, Ausgestaltung der Stechleiste 112 des Peilelements 110 und der Fällleiste 113 des Peilelements 110 auf der Außenseite 15 des Filterbauteils 1 nicht erkennbar ist. Die Stechleiste 112 und die Fällleiste 113 sind derart angeordnet, dass sie durch Verdeckungen, insbesondere durch den Rahmen 7, voneinander getrennt erscheinen.

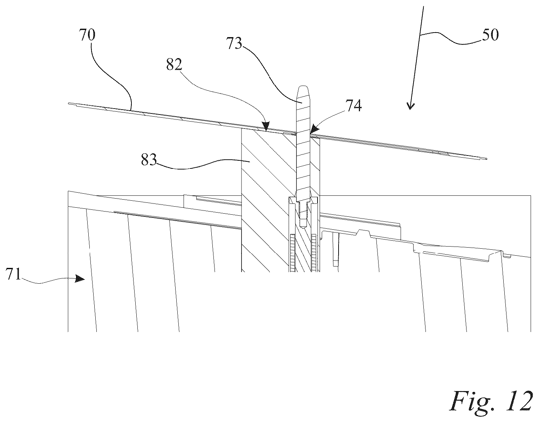

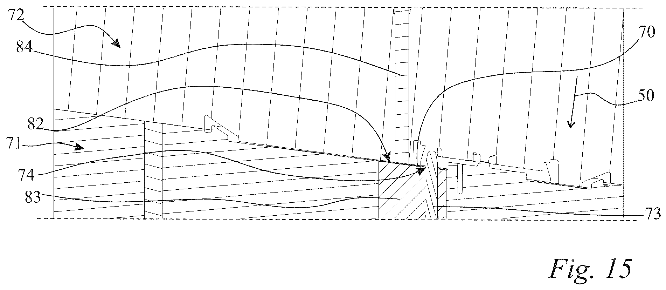

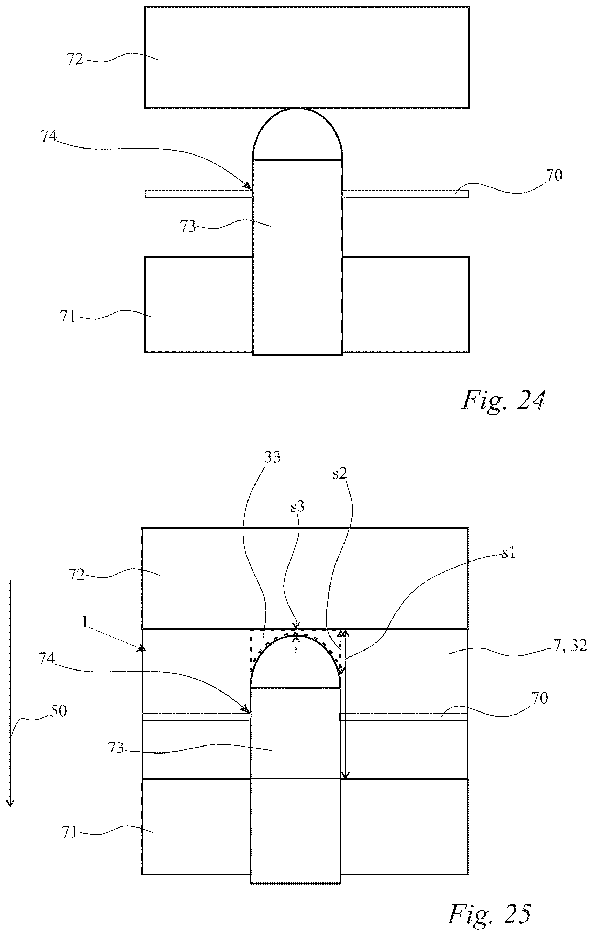

Bei der Herstellung des Filterbauteils 1 wird für alle Ausführungsbeispiele das Gewebe 70 in einem Gussverfahrensschritt zwischen der ersten Werkzeughälfte 71 und der zweiten Werkzeughälfte 72 so umgossen, dass hierbei der Rahmen 7 entsteht. Die Fig. 12 bis 15 zeigen ausschließlich für das Ausführungsbeispiel nach Fig. 10 die Positionierung des Gewebes 70 zwischen der ersten Werkzeughälfte 71 und der zweiten Werkzeughälfte 72. In der in Fig. 15 dargestellten Position ist das Gewebe 70 zwischen der ersten Werkzeughälfte 71 und der zweiten Werkzeughälfte 72 geklemmt gehalten. Der Stift 73 durchdringt das Gewebe 70 in Richtung von der ersten Werkzeughälfte 71 und der zweiten Werkzeughälfte 72 vollständig. Während des Gussverfahrensschritts entsteht am Ort des Stifts 73 in dem Rahmen 7 eine den Rahmen 7 in Richtung von der ersten Werkzeughälfte 71 und der zweiten Werkzeughälfte 72 vollständig durchdringende Halteöffnung 75. Die Position der Halteöffnung 75 ist in Fig. 10 eingezeichnet. Insbesondere durchdringt der Stift 73, der das Gewebe 70 während des Gussverfahrensschritts in Position hält, das Gewebe 70 an einer Stelle, die während des Gussverfahrensschritts so umspritzt wird, dass an dieser Stelle bzw. um diese Stelle herum der Rahmen 7 entsteht. Zur Durchdringung des Gewebes 70 mit dem Stift 73 besitzt das Gewebe 70 eine Durchgangsöffnung 74. Im Ausführungsbeispiel nach Fig. 10 durchdringt die Halteöffnung 75 den Rahmen 7 in Durchströmungsrichtung 50 vollständig. Im alternativen Ausführungsbeispiel nach Fig. 25 entsteht überhaupt erst keine Halteöffnung 75.

In beiden Fällen umfasst das Filterbauteil 1 eine Blockierung, durch die eine Durchströmung des Filterbauteils 1 mit Kühlluft in Durchströmungsrichtung 50 im Bereich der Durchgangsöffnung verhindert ist.

Beim Ausführungsbeispiel nach Fig. 10 wird die Durchgangsöffnung 74, insbesondere die Halteöffnung 75 im Rahmen 7 in einem dem Gussverfahrensschritt nachfolgenden Dichtungsverfahrensschritt mit einem Verschlusselement 76 aus Elastomer verschlossen. In diesem Fall ist die Blockierung das Verschlusselement 76. Insbesondere ist das Verschlusselement 76 aus einem thermoplastischen Elastomer. Die Durchgangsöffnung 74 durchdringt das Gewebe 70 in Richtung von der ersten Werkzeughälfte 71 hin zur zweiten Werkzeughälfte 72, insbesondere in Richtung entgegengesetzt zur Durchströmungsrichtung 50 vollständig. Während des Gussverfahrensschritts ist der Stift 73 durch die Durchgangsöffnung 74 geführt.

Während des Gussverfahrensschritts ist das Gewebe 70 unverlierbar mit der Durchgangsöffnung 74 auf dem Stift 73 aufgefädelt. Während des Gussverfahrensschritts kontaktiert der Stift 73 sowohl die erste Werkzeughälfte 71 als auch die zweite Werkzeughälfte 72. Eine Bewegung des Gewebes 70 in Richtung der Durchdringungsrichtung 50 oder entgegen hierzu ist durch die erste Werkzeughälfte 71 oder durch die zweite Werkzeughälfte 72 begrenzt. Das Gewebe 70 kann nicht vom Stift 73 abgezogen werden.

In allen Ausführungsbeispielen ist das Gewebe 70 biegesteif. Insbesondere ist das Gewebe 70 selbsttragend. Bei Unterstützung an einem Punkt ist das Gewebe 70 formstabil.

Der Rahmen 7 wird bei allen Ausführungsbeispielen im Gussverfahrensschritt mittels eines Spritzgussverfahrens, insbesondere mittels eines Kunststoffspritzgussverfahrens hergestellt.

Das Filterbauteil 1 umfasst eine in Fig. 10 dargestellte Verbindungsstruktur 32. Die Verbindungsstruktur 32 verbindet mindestens zwei gegenüberliegende Stellen des Umfangsrahmens 19 des Rahmens 7 miteinander. Die Verbindungsstruktur 32 ist Bestandteil des Rahmens 7. Die Verbindungsstruktur 32 umfasst die Verbindungsrippe 8 und die Verbindungsrippe 9. Beim Ausführungsbeispiel nach Fig. 10 ist die Halteöffnung 75 in der Verbindungsstruktur 32, Insbesondere ist in der Verbindungsstruktur 32 eine zweite Halteöffnung vorgesehen. Am Ort der Halteöffnung 75 ist auch die Durchgangsöffnung 74 angeordnet. Für alle Ausführungsbeispiele mit Durchgangsöffnung ist die Durchgangsöffnung 74 in einem Abstand zum Umfangsrahmen 19 angeordnet. Der Abstand ist in diesem Fall senkrecht zur Befestigungsrichtung 49, insbesondere senkrecht zur Durchströmungsrichtung 50 gemessen. Die Durchgangsöffnung 74 ist in einem in Richtung senkrecht zur Durchströmungsrichtung 50, insbesondere zur Befestigungsrichtung 49 gemessenen Abstand zu dem Rand 78 des Gewebes 70 in der Fläche des Gewebes 70 angeordnet. Insbesondere ist die die Durchgangsöffnung 74, in einer Seitenansicht senkrecht auf die Werkzeugebene des Werkzeugs 10 (Fig. 1, hier aber nicht dargestellt) in etwa in der Mitte des Filterbauteils 1, insbesondere in der Mitte des Gewebes 70, angeordnet. Insbesondere ist die Durchgangsöffnung 74, in dieser Seitenansicht in der Nähe des Flächenschwerpunkts der der Filteraußenkontur 28 zugeordneten Fläche angeordnet.

Wie der Vergleich der Fig. 13, 14 und 15 zeigt, wird das Gewebe 70 nach dem Einfädeln des Gewebes 70 in allen Ausführungsbeispielen mit Durchgangsöffnung auf dem Stift 73 gemeinsam mit einem Auflageelement 83, auf dessen Auflagefläche 82 das Gewebe 70 platziert ist, und der zweiten Werkzeughälfte 72 auf die erste Werkzeughälfte 72 zubewegt, so dass am Ende das Gewebe 70 sowohl an der ersten Werkzeughälfte 71 als auch an der zweiten Werkzeughälfte 72 anliegt. Während der Aufeinanderzubewegung der ersten Werkzeughälfte 71 und der zweiten Werkzeughälfte 72 wird der Abstand des Auflageelements 83 zu der ersten Werkzeughälfte 71 so weit verringert, dass er schließlich verschwindet. In analoger Weise verschwindet das Halteelement 84 bei der Aufeinanderzubewegung der ersten Werkzeughälfte 71 und der zweiten Werkzeughälfte 72 in der zweiten Werkzeughälfte 72. Das zweite Halteelement 84 steht am Ende nicht mehr aus der zweiten Werkzeughälfte 72 hervor.

Beim allen Ausführungsbeispielen wird im Gussverfahrensschritt das Gewebe 70 mit dem Rahmen 7 umgossen. Beim Ausführungsbeispiel nach Fig. 10 entsteht hierbei die Halteöffnung 75 im Rahmen 7. Nach dem Gussverfahrensschritt wird die Halteöffnung 75 mit dem Verschlusselement 76 verschlossen. Das Verschlusselement 76 wird gegossen, während sich der Rahmen 7 und das Gewebe 70 zwischen der ersten Werkzeughälfte 71 und der zweiten Werkzeughälfte 72 befinden. Zwischen dem Gussverfahrensschritt und dem Dichtungsverfahrensschritt befindet sich das Gewebe 70, insbesondere das Filterbauteil 1, bei allen Ausführungsbeispielen ununterbrochen zwischen der ersten Werkzeughälfte 71 und der zweiten Werkzeughälfte 72.

Im Dichtungsverfahrensschritt wird bei allen Ausführungsbeispielen das Dichtelement 77 hergestellt. Zunächst wird im Gussverfahrensschritt Kunststoff in das Gusswerkzeug 69 eingebracht. Erst zeitlich danach wird ein Elastomer, insbesondere ein thermoplastisches Elastomer in das Gusswerkzeug 69 eingebracht. Hierbei wird das Dichtelement 77 hergestellt.

Für das Ausführungsbeispiel nach Fig. 10 werden das Dichtelement 77 und das Verschlusselement 76 in einem einzigen Gussschritt gegossen. Das Dichtelement 77 und das Verschlusselement 76 sind materialeinheitlich, insbesondere monolithisch ausgebildet. Die Halteöffnung 75 im Rahmen 7 dient während des Eingießens des Materials zur Herstellung des Dichtelements 77 während des Dichtungsverfahrensschritts zur Entlüftung von durch das Material zur Herstellung des Dichtelements 77 verdrängter Luft. Dies gilt für das Ausführungsbeispiel nach Fig. 10.

Der Rahmen 7 besitzt in allen Ausführungsbeispielen eine Angussöffnung 79 zum Eingießen des Materials zur Herstellung des Dichtelements 77, wie beispielhaft in Fig. 10 dargestellt. In den Ausführungsbeispielen wird das Material zur Herstellung des Dichtelements 77, insbesondere zur Herstellung des Peil- und Dichtelements 111 auf der Außenseite 15 des Filterbauteils 1 auf das Filterbauteil 1, insbesondere auf den Rahmen 7 aufgebracht. Sowohl das Material zur Herstellung des Rahmens 7, insbesondere das Kunststoffmaterial, als auch das Material zur Herstellung des Dichtelements 77, insbesondere des Peil- und Dichtelements 111, insbesondere das thermoplastische Elastomer, wird auf derselben Seite des Filterbauteils 1, insbesondere des Rahmens 7, insbesondere auf der Außenseite 15, eingebracht. Dadurch ist eine einfache Gestaltung des jeweiligen Gusswerkzeugs möglich.

Im Ausführungsbeispiel nach Fig. 10 gelangt das Material zur Herstellung des Dichtelements 77 durch die Angussöffnung 79 hindurch von der Außenseite 15 auf die Innenseite 14 in den Kanal 80. Das Material fließt in den Kanal 80 und bildet in dem Kanal 80 das Dichtelement 77 aus. Hierbei verdrängt das Material, insbesondere das thermoplastische Elastomer, Luft. Diese Luft kann durch die Halteöffnung 75 im Rahmen 7 entweichen. Wie oben stehend beschrieben erstreckt sich der Kanal 80 zur Aufnahme des Dichtelements 77 am Rand des Rahmens 7. Der Kanal 80 läuft geschlossen in Umlaufrichtung 80 um. Die Halteöffnung 75 ist in einem Abstand zum Rand des Rahmens 7 angeordnet. Der Kanal 80 und die Halteöffnung 75 sind über einen Verbindungskanal 81 des Rahmens 7 miteinander verbunden. Der Verbindungskanal 81 erstreckt sich von dem Kanal 80 bis zur Halteöffnung 75. Der Verbindungskanal 81 ist in der Verbindungsrippe 8 ausgebildet. Im Ausführungsbeispiel ist in der Verbindungsrippe 9 ebenfalls ein Verbindungskanal 81 ausgebildet. Der Kanal 80 und der Verbindungskanal 81 sind auf der Innenseite 14 des Filterbauteils 1 angeordnet. Die Halteöffnung 75 durchdringt den Rahmen 7 ausgehend von seiner Innenseite 14 hin zur Außenseite 15 in Richtung entgegen der Durchströmungsrichtung 50 vollständig. Bei der Herstellung des Filterbauteils 1, insbesondere während des Dichtungsverfahrensschritts, ist die Innenseite 14 des Filterbauteils 1 der ersten Werkzeughälfte 71 zugewandt. Während des vorangehenden Gussverfahrensschritts sind sowohl der Kanal 80 als auch der Verbindungskanal 81 durch ein Bauteil der ersten Werkzeughälfte 71 ausgefüllt. Dadurch entstehen überhaupt erst der Kanal 80 und auch der Verbindungskanal 81. Während des Gussverfahrensschritts ist zwischen der ersten Werkzeughälfte 71 und dem Kanal 80, und auch zwischen der ersten Werkzeughälfte 71 und dem Verbindungskanal 81 ein Hohlraum ausgebildet. Dieser Hohlraum wird im Ausführungsbeispiel dadurch zur Verfügung gestellt, dass Platzhalter, die während des Gussverfahrensschritts in Richtung auf das Gewebe 70 vorstehen, aus der ersten Werkzeughälfte 71 entfernt oder in die erste Werkzeughälfte 71 zurückgezogen werden. Dadurch entsteht Platz für das Material, das zur Herstellung des Dichtelements 77 in den Kanal 80 fließt. Ebenso entsteht Platz für das Material, das durch den Verbindungskanal 81 in die Halteöffnung 75 fließt und hierbei die Halteöffnung 75 vollständig ausfüllt, so dass das Verschlusselement 76 entsteht. Hierbei kann die von dem Material zur Herstellung des Dichtelements 77 und des Verschlusselements 76 verdrängte Luft auf der Außenseite 15 des Filterbauteils 1 entweichen. Im Dichtungsverfahrensschritt können daher der Kanal 80 und der Verbindungskanal 81 weiterhin durch die erste Werkzeughälfte 71, insbesondere luftdicht, abgedeckt sein. Die verdrängte Luft kann über den Weg durch den noch nicht von dem Material zur Herstellung des Dichtelements 77 ausgefüllten Raum des Kanals 80 des Verbindungskanals 81 zur Halteöffnung 75 strömen und auf der Außenseite 15 des Filterbauteils 1 entweichen. Dadurch ist während des Dichtungsverfahrensschritts eine einfache Entlüftung des Kanals 80 und des Verbindungskanals 81 möglich. Auf einfache Weise können sowohl das Dichtelement 77 als auch das Verschlusselement 76 in einem einzigen Gussverfahrensschritt hergestellt werden. In diesem Gussverfahrensschritt wird sowohl das Dichtelement 77 als auch das Verschlusselement 76 aus thermoplastischem Elastomer hergestellt. Die Halteöffnung 75 ist anschließend mit dem Verschlusselement 76 aus Elastomer, insbesondere aus thermoplastischem Elastomer verschlossen.

Beim Ausführungsbeispiel nach den Fig. 16 bis 23 erfolgt die Entlüftung während des Dichtungsverfahrensschritts auf andere Weise. Die Position der Angussöffnung 79 ist in Fig. 16 und in Fig. 19 markiert. Sie befindet sich oberhalb des Peilelementkanals 114, insbesondere oberhalb des Kanals zur Ausbildung der Stechleiste 112. Ausgehend von der Angussöffnung 79 fließt das Material zur Herstellung des Peil- und Dichtelements 111 in zwei Richtungen im Peilelementkanal 114, insbesondere im Kanal zur Ausbildung der Stechleiste 112. Die eine Richtung führt weg vom Umfangsrahmen 19, die andere Richtung hin zum Umfangsrahmen 19 und hin zur Durchflussöffnung 16 (Fig. 19). Durch die Durchflussöffnung 16 gelangt das Material von der Außenseite 15 des Filterbauteils 1, insbesondere des Rahmens 7, auf die Innenseite 14 des Filterbauteils 1, insbesondere des Rahmens 7 (Fig. 17 und 18). Auf der Innenseite 14 des Filterbauteils 1, insbesondere des Rahmens 7, fließt das Material durch den Kanal 80 und bildet hierbei das Dichtelement 77 als Teil des Dicht- und Peilelements 111 aus. Durch eine weitere Durchflussöffnung 16 gelangt das Material aus dem Kanal 80 auf der Innenseite 14 wieder auf die Außenseite 15 und fließt dort im Kanal zur Ausbildung der Fällleiste 113. Der Kanal zur Ausbildung der Fällleiste 113 und der Kanal zur Ausbildung der Stechleiste 112 sind beide Bestandteil des Peilelementkanals 114. Der Kanal zur Ausbildung der Fällleiste 113 und der Kanal zur Ausbildung der Stechleiste 112 sind getrennt voneinander ausgebildet. Die Richtung der Längserstreckung des Kanals zur Ausbildung der Fällleiste 113 verläuft quer, insbesondere senkrecht, zur Richtung der Längserstreckung des Kanals zur Ausbildung der Stechleiste 112, insbesondere in Ansicht in Richtung der Durchströmungsrichtung 50. In Ansicht in Richtung der Durchströmungsrichtung 50 schneiden sich gedachte Verlängerungslinien des Kanals zur Ausbildung der Fällleiste 113 und des Kanals zur Ausbildung der Stechleiste 112 orthogonal. Am Ende des Kanals zur Ausbildung der Fällleiste ist eine weitere Durchflussöffnung, diesmal von der Außenseite 15 zur Innenseite 14 ausgebildet. Durch diese erfolgt die Entlüftung für das sich ausgehend von der Angussöffnung 79 in Richtung zum Umfangsrahmen 19 ausbreitende Material. In die andere Richtung erfolgt die Entlüftung durch eine weitere Durchflussöffnung von der Außenseite 15 zu Innenseite 14 am Ende des Kanals zur Ausbildung der Stechleiste 112.

In Ausführung alternativ zur Ausführung nach Fig. 10 kann die Blockierung, durch die eine Durchströmung des Filterbauteils 1 mit Kühlluft in Durchströmungsrichtung 50 im Bereich der Durchgangsöffnung 74 verhindert ist, auf andere Weise als durch ein Verschlusselement 76 gebildet sein. Fig. 25 zeigt schematisch ein entsprechendes Filterbauteil 1. Allen Ausführungen gemein ist, dass die Durchgangsöffnung 74, insbesondere ein Rand der Durchgangsöffnung 74, von Material des Rahmens 7 umgeben ist. In Fig. 10 ist die Durchgangsöffnung 74 von der Halteöffnung 75 umgeben, die durch den Rahmen gebildet ist. Im Ausführungsbeispiel nach Fig. 25 ist die Durchgangsöffnung 74 in Richtung senkrecht zur Durchströmungsrichtung, insbesondere in Radialrichtung, vom Rahmen 7 umgeben.

Die Durchgangsöffnung 74 ist von der Verbindungsstruktur 32 überdeckt. Die Verbindungsstruktur 32 verbindet in allen Ausführungsbeispielen mindestens zwei Stellen des Umfangsrahmens 19 miteinander. Bezüglich dieser Verbindung ist die Verbindungsstruktur 32 für das Ausführungsbeispiel nach Fig. 25 analog zu der in Fig. 10 dargestellten Verbindungsstruktur 32 ausgebildet.

Im Ausführungsbeispiel nach Fig. 25 ist die Blockierung ein Überdeckungsabschnitt 33. Der Überdeckungsabschnitt 33 ist in Fig. 25 mit gestrichelter Linie gekennzeichnet. Der Überdeckungsabschnitt 33 befindet sich ausschließlich in dem Bereich in Richtung der Durchströmungsrichtung 50 oder in Richtung entgegengesetzt zur Durchströmungsrichtung 50 oberhalb oder unter unterhalb der Durchgangsöffnung 74. Der Überdeckungsabschnitt 33 ist ausschließlich im Bereich einer Projektion der Durchgangsöffnung 74 in Durchströmungsrichtung 50 oder in Richtung entgegen der Durchströmungsrichtung 50 angeordnet. Im Ausführungsbeispiel ist der Überdeckungsabschnitt 33 durch einen Abschnitt des Rahmens 7 gebildet.

Die Blockierung verdeckt die Durchgangsöffnung 74 in allen Ausführungsbeispielen bei Ansicht in Richtung der Durchströmungsrichtung 50. Im Ausführungsbeispiel nach Fig. 25 überdeckt der Überdeckungsabschnitt 33 die Durchgangsöffnung 74 vollständig. Im Gegensatz zum Verschlusselement 76 ist der Überdeckungsabschnitt 33, insbesondere bezüglich der Durchströmungsrichtung 50, zu der Durchgangsöffnung 74, insbesondere zu dem Gewebe 70, beabstandet. Die Blockierung deckt die Durchgangsöffnung 74 im Ausführungsbeispiel nach Fig. 25 haubenförmig ab.

Der Rahmen 7 weist im Bereich um die Durchgangsöffnung 74 herum eine in Durchströmungsrichtung 50 gemessene Rahmenstärke s1 auf. Die Rahmenstärke s1 ist angrenzend an den Überdeckungsabschnitt 33 gemessen. Die Rahmenstärke s1 ist angrenzend an die Durchgangsöffnung 74, insbesondere angrenzend an den Rand der Durchgangsöffnung 74, insbesondere am Rand der Durchgangsöffnung 74, gemessen. Der Überdeckungsabschnitt 33 weist eine in Durchströmungsrichtung 50 gemessene Überdeckungsstärke s2 auf. Die Überdeckungsstärke s2 entspricht der größten Ausdehnung des Überdeckungsbereichs 33 in Richtung der Durchströmungsrichtung 50. Die Überdeckungsstärke s2 ist im Ausführungsbeispiel angrenzend an die Durchgangsöffnung 74, insbesondere am Rand der Durchgangsöffnung 74, gemessen. Der Überdeckungsabschnitt 33 weist eine in Durchströmungsrichtung 50 gemessene Mindestüberdeckungsstärke s3 auf. Die Mindestüberdeckungsstärke s3 entspricht der kleinsten Ausdehnung des Überdeckungsbereichs 33 in Richtung der Durchströmungsrichtung 50. Die Mindestüberdeckungsstärke s3 ist insbesondere oberhalb der Durchgangsöffnung 74, im Ausführungsbeispiel im Zentrum der Durchgangsöffnung 74, gemessen.

Die Überdeckungsstärke s2 beträgt höchstens 50%, insbesondere höchstens 20%, insbesondere höchstens 5%, der Rahmenstärke s1.

Die Überdeckungsstärke s2 beträgt mindestens 1% der Rahmenstärke s1.

Die Überdeckungsstärke s2 beträgt von 0,01 mm bis 5 mm, insbesondere von 0,05 mm bis 2 mm.

Die Blockierung ist im Ausführungsbeispiel nach Fig. 25 von Material des Rahmens 7 gebildet.

Die Fig. 24 und 25 zeigen ein alternatives Gusswerkzeug mit einer ersten Werkzeughälfte 71 und einer zweiten Werkzeughälfte 72. Das alternative Gusswerkzeug dient zur Herstellung des Filterbauteils 1 in alternativer Ausführung gemäß Fig. 25. Das alternative Gusswerkzeug umfasst eine erste Werkzeughälfte 71, eine zweite Werkzeughälfte 72 und mindestes einen Stift 73.

Bei der Herstellung des alternativen Filterbauteils 1 wird das Gewebe 70 in einem Gussverfahrensschritt zwischen der ersten Werkzeughälfte 71 und der zweiten Werkzeughälfte 72 so umgossen, dass hierbei der Rahmen 7 entsteht. Der mindestens eine Stift 73 ist während des Gussverfahrensschritts durch die Durchgangsöffnung 74 geführt, um das Gewebe 70 in Position zu halten. Eine Durchströmung des Filterbauteils 1 mit Kühlluft in Durchströmungsrichtung 50 wird im Bereich der Durchgangsöffnung 74 durch Vorsehen der Blockierung verhindert. Die Blockierung wird hierbei während des Gussverfahrensschritt durch den Rahmen 7 gebildet.

Während des Gussverfahrensschritts dringt Material zur Herstellung des Rahmens 7 in den Bereich zwischen den Stift 73 und das alternative Gusswerkzeug vor. Zu Beginn des Gussverfahrensschritts kann der Stift 73 sowohl an der ersten Werkzeughälfte 71 als auch an der zweiten Werkzeughälfte 72 des alternativen Gusswerkzeugs anliegen. Während des Gussverfahrensschritts wird der Stift 73 von der zweiten Werkzeughälfte 72 entfernt. Im Ausführungsbeispiel geschieht dies aufgrund des Drucks des Materials zur Herstellung des Rahmens 7. Alternativ kann der Stift 73 auch in einem Abstand zu der zweiten Werkzeughälfte 72 angeordnet sein. Dieser Abstand kann insbesondere schon zu Beginn des Gussverfahrensschritts bestehen. Insbesondere ist der Abstand während des Gussverfahrensschritts unveränderlich. Insbesondere beträgt der Abstand von 1 mm bis 20 mm, insbesondere von 1 mm bis 10 mm, insbesondere von 1 mm bis 3 mm. Es können aber auch andere Werte für den Abstand vorgesehen sein. Der Abstand ist insbesondere in Durchströmungsrichtung 50 gemessen.

Der Stift 73 ist in Richtung auf die zweite Werkzeughälfte 72 mit einer Spannkraft vorgespannt, beispielsweise mittels einer nicht dargestellten Feder. Die Spannkraft und der Druck, mit dem das Material zur Herstellung des Rahmens 7 während des Gussverfahrensschritts eingebracht wird, sind so aufeinander abgestimmt, dass der Stift 73 während des Gussverfahrensschritts entgegen der Richtung der Spannkraft durch das Material zur Herstellung des Rahmens 7 von der zweiten Werkzeughälfte 72 entfernt wird. Das Material zur Herstellung des Rahmens 7 dring in den Raum zwischen der zweiten Werkzeughälfte 72 und dem Stift 73 vor. Hierbei wird die Blockierung, insbesondere der Überdeckungsabschnitt 33 ausgebildet, wie in Fig. 25 dargestellt. Die Durchgangsöffnung 74 des Gewebes 70 wird hierbei insbesondere nicht von Material zur Herstellung des Rahmens 7 ausgefüllt.

Weitere Aspekte der Erfindung sind:
Aspekt A1: Filterbauteil zur Filterung von Kühlluft für ein handgeführtes Arbeitsgerät 2, wobei das Filterbauteil 1 dazu vorgesehen ist, einen Teil einer Außenseite 3 des Arbeitsgeräts 2 zu bilden, dadurch gekennzeichnet, dass das Filterbauteil 1 dicke Fadenelemente 4 und dünne Fadenelemente 5 aufweist, dass sowohl die dünnen Fadenelemente 5 als auch die dicken Fadenelemente 4 zur Filterung der Kühlluft von der Kühlluft zu passieren sind, dass die dicken Fadenelemente 4 und die dünnen Fadenelemente 5 jeweils fadenförmig sind, dass der Durchmesser d1 der dicken Fadenelemente 4 größer als der Durchmesser d2 der dünnen Fadenelemente 5 ist, und dass die dicken Fadenelemente 4 zur Abstützung der dünnen Fadenelemente 5 dienen.
Aspekt A2: Filterbauteil nach Aspekt A1,
   dadurch gekennzeichnet,
   - dass die dicken Fadenelemente 4 für sich genommen zu einem Stützgewebe 20 verwoben sind und die dünnen Fadenelemente 5 für sich genommen zu einem Filtergewebe 30 verwoben sind,
      oder
   - dass die dicken Fadenelemente 4 und die dünnen Fadenelemente 5 gemeinsam zu einem einzigen Stützfiltergewebe 40 verwoben sind.
Aspekt A3: Filterbauteil nach Aspekt A1,
   dadurch gekennzeichnet,
   - dass die dicken Fadenelemente 4 für sich genommen zu einem Stützgewebe 20 verwirkt sind und die dünnen Fadenelemente 5 für sich genommen zu einem Filtergewebe 30 verwirkt sind,
      oder
   - dass die dicken Fadenelemente 4 und die dünnen Fadenelemente 5 gemeinsam zu einem einzigen Stützfiltergewebe 40 verwirkt sind.
Aspekt A4. Filterbauteil nach Aspekt A2 oder A3,
   dadurch gekennzeichnet, dass sich das Filtergewebe 30 im Betrieb des Filterbauteils 1, insbesondere unmittelbar, an dem Stützgewebe 20 abstützt.
Aspekt A5: Filterbauteil nach einem der Aspekte A2 bis A4,
   dadurch gekennzeichnet, dass das Stützgewebe 20 zur Anordnung im Arbeitsgerät 2 so vorgesehen ist, dass es einen Teil der Außenseite 3 des Arbeitsgeräts 2 bildet, und dass das Filtergewebe 30 einem Innenbereich 6 des Arbeitsgeräts 2 zugewandt ist
      oder,
   dass das Filtergewebe 30 zur Anordnung im Arbeitsgerät 2 so vorgesehen ist, dass es einen Teil der Außenseite 3 des Arbeitsgeräts 2 bildet, und dass das Stützgewebe 20 einem Innenbereich 6 des Arbeitsgeräts 2 zugewandt ist.
Aspekt A6: Filterbauteil nach einem der Aspekte A2 bis A5,
   dadurch gekennzeichnet, dass das Filterbauteil ein weiteres Stützgewebe 60 umfasst, und dass das Filtergewebe 30 zwischen dem Stützgewebe 20 und dem weiteren Stützgewebe 60 angeordnet ist.
Aspekt A7: Filterbauteil nach einem der Aspekte A2 bis A6,
   dadurch gekennzeichnet, dass eine Stützmaschenweite a1 des Stützgewebes 20 größer als eine Filtermaschenweite a2 des Filtergewebes 30 ist.
Aspekt A8: Filterbauteil nach einem der Aspekte A2 bis A7,
   dadurch gekennzeichnet, dass das Filterbauteil 1 einen Rahmen 7 besitzt, der eine Baueinheit aus Filtergewebe 30 und Stützgewebe 20 bezüglich einer Durchströmungsrichtung 50 der Kühlluft von beiden Seiten her begrenzt, und insbesondere dass der Rahmen 7 mittels Spritzgießen um das Filtergewebe 30 und das Stützgewebe 20 gespritzt ist.
Aspekt A9: Filterbauteil nach Aspekt A2,
   dadurch gekennzeichnet, dass die dicken Fadenelemente 4 und die dünnen Fadenelemente 5 zu einem Tressengewebe, verwoben sind.
Aspekt A10: Filterbauteil nach einem der Aspekte A1 bis A9,
   dadurch gekennzeichnet, dass die dicken Fadenelemente 4 und/oder die dünnen Fadenelemente 5 aus Metall, insbesondere aus nichtrostendem Metall, insbesondere aus Edelstahl, sind.
Aspekt A11: Filterbauteil nach einem der Aspekte A1 bis A10,
   dadurch gekennzeichnet, dass das Filterbauteil 1 mindestens zwei Verbindungsrippen 8, 9 aufweist, dass die Verbindungsrippen 8, 9 auf den dünnen Fadenelementen 5 und/oder den dicken Fadenelementen 4 angeordnet sind und zur Anordnung auf der Außenseite des Arbeitsgeräts vorgesehen sind.
Aspekt A12: Filterbauteil nach Aspekt A11,
   dadurch gekennzeichnet, dass die mindestens zwei Verbindungsrippen 8, 9 zumindest einen Teil der dicken Fadenelemente 4 und einen Teil der dünnen Fadenelemente 5 bezüglich der Durchströmungsrichtung 50 der Kühlluft von beiden Seiten einschließen.
Aspekt A13: Handgeführtes Arbeitsgerät mit einem Filterbauteil nach einem der Aspekte A1 bis A12,
   dadurch gekennzeichnet, dass das Filterbauteil 1 einen Teil einer Außenseite 3 des Arbeitsgeräts 2 bildet, und dass durch das Filterbauteil 1 Kühlluft in einer Durchströmungsrichtung 50 von außen in einen Innenbereich 6 des Arbeitsgeräts 2 strömen kann.
Aspekt B1: Filterbauteil zur Filterung von Kühlluft für ein handgeführtes Arbeitsgerät 2, wobei das Filterbauteil 1 einen Rahmen 7 und ein Gewebe 70 umfasst, wobei das Filterbauteil 1 zur Durchströmung mit Kühlluft in einer Durchströmungsrichtung 50 vorgesehen ist, wobei der Rahmen 7 das Gewebe 70 bezüglich der Durchströmungsrichtung 50 von beiden Seiten her einfasst und um die Durchströmungsrichtung 50 geschlossen umläuft, wobei das Gewebe 70 eine das Gewebe 70 in Durchströmungsrichtung 50 vollständig durchdringende Durchgangsöffnung 74 zur Durchführung eines Stifts 73 während der Herstellung des Filtebauteils 1 besitzt,
   dadurch gekennzeichnet, dass das Filterbauteil 1 eine Blockierung umfasst, und dass eine Durchströmung des Filterbauteils 1 mit Kühlluft in Durchströmungsrichtung 50 im Bereich der Durchgangsöffnung 74 durch die Blockierung verhindert ist.
Aspekt B2: Filterbauteil nach Aspekt B1,
   dadurch gekennzeichnet, dass die Durchgangsöffnung 74, insbesondere ein Rand der Durchgangsöffnung 74, von Material des Rahmens 7 umgeben ist.
Aspekt B3: Filterbauteil nach Aspekt B1 oder B2,
   dadurch gekennzeichnet, dass der Rahmen 7 eine Umfangsrahmen 19 und mindestens eine Verbindungsstruktur 32 umfasst, dass der Umfangsrahmen 19 um einen Rand 78 des Gewebes 70 umläuft, dass die Verbindungsstruktur 32 zwei gegenüberliegende Stellen des Umfangsrahmens 19 miteinander verbindet, und dass die Durchgangsöffnung 74 im Bereich der Verbindungsstruktur 32, insbesondere in einem Abstand zum Umfangsrahmen 19, angeordnet ist.
Aspekt B4: Filterbauteil nach Aspekt B3,
   dadurch gekennzeichnet, dass die Durchgangsöffnung 74 von der Verbindungsstruktur 32 überdeckt ist.
Aspekt B5: Filterbauteil nach einem der Aspekte B1 bis B4,
   dadurch gekennzeichnet, dass die Blockierung ein Überdeckungsabschnitt 33 ist, der die Durchgangsöffnung 74 überdeckt, insbesondere vollständig überdeckt.
Aspekt B6: Filterbauteil nach Aspekt B5,
   dadurch gekennzeichnet, dass der Rahmen 7 im Bereich um die Durchgangsöffnung 74 herum eine in Durchströmungsrichtung 50 gemessene Rahmenstärke s1 aufweist, dass der Überdeckungsabschnitt 33 eine in Durchströmungsrichtung 50 gemessene Überdeckungsstärke s2 aufweist.
Aspekt B7: Filtebauteil nach Aspekt B6,
   dadurch gekennzeichnet, dass die Überdeckungsstärke s2 höchstens 50%, insbesondere höchstens 20%, insbesondere höchstens 5%, der Rahmenstärke s1 beträgt.
Aspekt B8: Filterbauteil nach Aspekt B6 oder B7,
   dadurch gekennzeichnet, dass die Überdeckungsstärke s2 von 0,01 mm bis 5 mm, insbesondere von 0,05 mm bis 2 mm, beträgt.
Aspekt B9: Filterbauteil nach einem der Aspekte B1 bis B8,
   dadurch gekennzeichnet, dass die Blockierung von Material des Rahmens 7 gebildet ist.
Aspekt B10 Filterbauteil nach einem der Aspekte B1 bis B3,
   dadurch gekennzeichnet, dass die Durchgangsöffnung 74 mit einem Verschlusselement 76 aus Elastomer, insbesondere aus thermoplastischem Elastomer, verschlossen ist.
Aspekt B11: Verfahren zur Herstellung eines Filterbauteils zur Filterung von Kühlluft für ein handgeführtes Arbeitsgerät 2, wobei das Filterbauteil 1 einen Rahmen 7 und ein Gewebe 70 umfasst, wobei das Filterbauteil 1 zur Durchströmung mit Kühlluft in einer Durchströmungsrichtung 50 vorgesehen ist, wobei der Rahmen 7 das Gewebe 70 einfasst, wobei bei der Herstellung des Filterbauteils 1 das Gewebe 70 in einem Gussverfahrensschritt zwischen einer ersten Werkzeughälfte 71 und einer zweiten Werkzeughälfte 72 so umgossen wird, dass hierbei der Rahmen 7 entsteht, wobei das Gewebe 70 eine Durchgangsöffnung 74 besitzt,
   wobei mindestens ein Stift 73 während des Gussverfahrensschritts durch die Durchgangsöffnung 74 geführt wird, um das Gewebe 70 in Position zu halten,
   dadurch gekennzeichnet, dass eine Durchströmung des Filterbauteils 1 mit Kühlluft in Durchströmungsrichtung 50 im Bereich der Durchgangsöffnung 74 durch Vorsehen einer Blockierung verhindert wird, und insbesondere dass die Blockierung durch den Rahmen 7 gebildet wird.
Aspekt C1: Handgeführtes Arbeitsgerät umfassend einen Grundkörper 11 und ein Filterbauteil 1 zur Filterung von Kühlluft, wobei das Filterbauteil 1 mittels des Befestigungselements 12 an dem Grundkörper 11 bezüglich einer Befestigungsrichtung 49 befestigbar ist, wobei das Filterbauteil 1 einen Rahmen 7 besitzt, wobei das Filterbauteil 1 ein entlang einer Umlaufrichtung 48 umlaufendes Dichtelement 77 zur Abdichtung zwischen dem Rahmen 7 und dem Grundkörper 11 aufweist, wobei das Dichtelement 77 in Befestigungsrichtung 49 zwischen dem Rahmen 7 und dem Grundkörper 11 angeordnet ist,
   dadurch gekennzeichnet, dass das Arbeitsgerät 2 mindestens ein Anschlagelement 130 zwischen dem Grundkörper 11 und dem Rahmen 7 umfasst, dass eine Annäherung von Rahmen 7 und Grundkörper 11 in Befestigungsrichtung 49 während der Befestigung des Filterbauteils 1 an dem Grundkörper 11 durch das Anschlagelement 130 begrenzt ist.
Aspekt C2: Handgeführtes Arbeitsgerät nach Aspekt C1,
   dadurch gekennzeichnet, dass das mindestens eine Anschlagelement 130 eine Verformung des Dichtelements 77 in Befestigungsrichtung 49 begrenzt.
Aspekt C3: Handgeführtes Arbeitsgerät nach Aspekt C2,
   dadurch gekennzeichnet, dass das Dichtelement 77 an einer Komprimierungsstelle 132 zwischen dem Rahmen 7 und dem Grundkörper 11 im vollständig komprimierten Zustand eine in Befestigungsrichtung 49 gemessene Komprimierungshöhe h2 aufweist, dass das Dichtelement 77 im unkomprimierten Zustand an derselben Komprimierungsstelle 132 eine in derselben Richtung gemessene Dichtelementhöhe h1 aufweist, und dass das mindestens eine Anschlagelement 130 die Komprimierung des Dichtelements 77 in Befestigungsrichtung 49 an der Komprimierungsstelle 132 derart begrenzt, dass die Komprimierungshöhe h2 mindestens 50%, insbesondere mindestens 80%, insbesondere mindestens 90%, der Dichtelementhöhe h1 beträgt.
Aspekt C4: Handgeführtes Arbeitsgerät nach einem der Aspekte C1 bis C3,
   dadurch gekennzeichnet, dass der Rahmen 7 eine in Umlaufrichtung 48 umlaufende Rahmenkante 17 besitzt und/oder dass der Grundkörper 11 eine in Umlaufrichtung 48 umlaufende Grundkörperfläche 18 besitzt, und dass das mindestens eine Anschlagelement 130 bezüglich der Befestigungsrichtung 49 über die Rahmenkante 17 und/oder über die Grundkörperfläche 18 vorsteht.
Aspekt C5: Handgeführtes Arbeitsgerät nach einem der Aspekte C1 bis C4,
   dadurch gekennzeichnet, dass das mindestens eine Anschlagelement 130 am Rahmen 7 oder am Grundkörper 11 festgelegt ist, insbesondere dass das mindestens eine Anschlagelement 130 materialeinheitlich mit dem Rahmen 7 oder dem Grundkörper 11 ausgebildet ist.
Aspekt C6: Handgeführtes Arbeitsgerät nach einem der Aspekte C1 bis C5,
   dadurch gekennzeichnet, dass ein möglicher, in Richtung senkrecht zur Befestigungsrichtung 49 gemessener Abstand r zwischen dem Dichtelement 77 und dem mindestens einen Anschlagelement 130 kleiner als die fünffache, insbesondere die dreifache, insbesondere die einfache, Dichtelementhöhe h1 ist.
Aspekt C7: Handgeführtes Arbeitsgerät nach einem der Aspekte C1 bis C6,
   dadurch gekennzeichnet, dass zur Befestigung des Filterbauteils 1 an dem Grundkörper 11 ausschließlich ein einziges Befestigungselement 12 vorgesehen ist, insbesondere dass das Befestigungselement 12 beabstandet zu einem Rand des Rahmens 7 angeordnet ist.
Aspekt C8: Handgeführtes Arbeitsgerät nach einem der Aspekte C1 bis C7,
   dadurch gekennzeichnet, dass mindestens zwei, insbesondere mehrere Anschlagelemente 130 vorgesehen sind, die zueinander bezüglich der Umlaufrichtung 48 beabstandet sind.
Aspekt D1: Filterbauteil zur Filterung von Kühlluft für ein handgeführtes Arbeitsgerät 2, wobei das Filterbauteil 1 dazu vorgesehen ist, einen Teil einer Außenseite 3 des Arbeitsgeräts 2 zu bilden und an einem Grundkörper 11 des Arbeitsgeräts 2 angebracht zu werden, wobei das Filterbauteil 1 ein Peilelement 110 zur Ausrichtung des Arbeitsgeräts 2, insbesondere zur Ausrichtung eines Werkzeugs 10 des Arbeitsgeräts 2, umfasst,
   dadurch gekennzeichnet, dass das Filterbauteil 1 ein Dichtelement 77 zur Anlage an dem Grundkörper 11 des handgeführten Arbeitsgeräts 2 und zur Abdichtung zwischen dem Filterbauteil 1 und dem Grundkörper 11 aufweist, und dass das Peilelement 110 und das Dichtelement 77 materialeinheitlich ausgebildet sind.
Aspekt D2: Filterbauteil nach Aspekt D1,
   dadurch gekennzeichnet, dass das Peilelement 110 und das Dichtelement 77 miteinander monolithisch als Peil- und Dichtelement 111 ausgebildet sind.
Aspekt D3: Filterbauteil nach Aspekt D1 oder D2,
   dadurch gekennzeichnet, dass sowohl das Peilelement 110 als auch das Dichtelement 77 aus einem thermoplastischen Elastomer sind.
Aspekt D4: Filterbauteil nach einem der Aspekte D1 bis D3,
   dadurch gekennzeichnet, dass das Filterbauteil 1 eine in Einbaulage des Filterbauteils 1 dem Grundkörper 11 zugewandte Innenseite 14 und eine in Einbaulage des Filterbauteils 1 dem Grundkörper 11 abgewandte Außenseite 15 aufweist, dass das Filterbauteil 1 mindestens eine Durchflussöffnung 16, insbesondere mindestens zwei Durchflussöffnungen 16, ganz insbesondere vier Durchflussöffnungen 16, aufweist, dass die mindestens eine Durchflussöffnung 16 das Filterbauteil von der Innenseite 14 bis zur Außenseite 15 vollständig durchdringt, und dass sich das Peil- und Dichtelement 111 durch die mindestens eine Durchflussöffnung 16 hindurch erstreckt.
Aspekt D5: Filterbauteil nach einem der Aspekte D1 bis D4,
   dadurch gekennzeichnet, dass das Filterbauteil 1 einen Rahmen 7 besitzt, dass der Rahmen 7 an der Innenseite 14 des Filterbauteils 1 einen Kanal 80 zur Aufnahme des Dichtelements 77 aufweist, und dass der Rahmen 7 an der Außenseite 15 des Filterbauteils 1 einen Peilelementkanal 114 zur Aufnahme des Peilelements 110 aufweist.
Aspekt D6: Filterbauteil nach den Aspekten D4 und D5,
   dadurch gekennzeichnet, dass die mindestens eine Durchflussöffnung 16 den Kanal 80 und den Peilelementkanal 114 miteinander verbindet.
Aspekt D7: Filterbauteil nach einem der Aspekte D1 bis D6,
   dadurch gekennzeichnet, dass der Rahmen 7 und das Peilelement 110 farblich zueinander kontrastieren.
Aspekt D8: Filterbauteil nach einem der Aspekte D1 bis D7,
   dadurch gekennzeichnet, dass Peilelement 110 auf der Außenseite 15 des Filterbauteils 1 angeordnet ist.
Aspekt D9: Handgeführtes Arbeitsgerät umfassend ein Filterbauteil 1 nach einem der Aspekte D1 bis D8.
Aspekt D10: Handgeführtes Arbeitsgerät mit einem Filterbauteil nach Aspekt D8,
   dadurch gekennzeichnet, dass das Arbeitsgerät 2 ein Werkzeug 10 umfasst, dass das Werkzeug 10 eine Längserstreckung besitzt, dass das Peilelement 110 eine Stechleiste 112 und/oder eine Fällleiste 113 aufweist, und dass sich die Stechleiste 112 in Einbaulage im Wesentlichen in Richtung der Längserstreckung erstreckt und/oder dass sich die Fällleiste 113 in Richtung quer, insbesondere senkrecht, zur Richtung der Längserstreckung erstreckt.
Aspekt D11: Handgeführtes Arbeitsgerät nach Aspekt D10,
   dadurch gekennzeichnet, dass die Stechleiste 112 und die Fällleiste 113 derart angeordnet sind, dass sie durch Verdeckungen voneinander getrennt erscheinen.
Aspekt D12: Verfahren zur Herstellung eines Filterbauteils zur Filterung von Kühlluft für ein handgeführtes Arbeitsgerät 2, wobei das Filterbauteil 1 dazu vorgesehen ist, einen Teil einer Außenseite 3 des Arbeitsgeräts 2 zu bilden und an einem Grundkörper 11 des Arbeitsgeräts 2 angebracht zu werden, wobei das Filterbauteil 1 ein Peilelement 110 zur Ausrichtung des Arbeitsgeräts 2, insbesondere zur Ausrichtung eines Werkzeugs 10 des Arbeitsgeräts 2, umfasst,
   dadurch gekennzeichnet, dass das Filterbauteil 1 ein Dichtelement 77 zur Anlage an dem Grundkörper 11 des handgeführten Arbeitsgeräts 2 und zur Abdichtung zwischen dem Filterbauteil 1 und dem Grundkörper 11 aufweist, und dass das Peilelement 110 und das Dichtelement 77 in einem einzigen Gussverfahrensschritt gegossen werden und hierbei ein, insbesondere monolithisches, Peil- und Dichtelement 111 ausgebildet wird.

## Patentansprüche

1. Handgeführtes Arbeitsgerät mit einem Filterbauteil (1) zur Filterung von Kühlluft für das handgeführte Arbeitsgerät (2), wobei das Filterbauteil (1) einen Teil einer Außenseite (3) des Arbeitsgeräts (2) bildet, wobei durch das Filterbauteil (1) Kühlluft in einer Durchströmungsrichtung (50) von außen in einen Innenbereich (6) des Arbeitsgeräts (2) strömen kann,
**dadurch gekennzeichnet, dass** das Filterbauteil (1) dicke Fadenelemente (4) und dünne Fadenelemente (5) aufweist, dass sowohl die dünnen Fadenelemente (5) als auch die dicken Fadenelemente (4) zur Filterung der Kühlluft von der Kühlluft zu passieren sind, dass die dicken Fadenelemente (4) und die dünnen Fadenelemente (5) jeweils fadenförmig sind, dass der Durchmesser (d1) der dicken Fadenelemente (4) größer als der Durchmesser (d2) der dünnen Fadenelemente (5) ist, und dass die dicken Fadenelemente (4) zur Abstützung der dünnen Fadenelemente (5) dienen.

2. Arbeitsgerät nach Anspruch 1,
**dadurch gekennzeichnet,**
- **dass** die dicken Fadenelemente (4) für sich genommen zu einem Stützgewebe (20) verwoben sind und die dünnen Fadenelemente (5) für sich genommen zu einem Filtergewebe (30) verwoben sind,
oder
- **dass** die dicken Fadenelemente (4) und die dünnen Fadenelemente (5) gemeinsam zu einem einzigen Stützfiltergewebe (40) verwoben sind.

3. Arbeitsgerät nach Anspruch 1,
**dadurch gekennzeichnet,**
- **dass** die dicken Fadenelemente (4) für sich genommen zu einem Stützgewebe (20) verwirkt sind und die dünnen Fadenelemente (5) für sich genommen zu einem Filtergewebe (30) verwirkt sind,
oder
- **dass** die dicken Fadenelemente (4) und die dünnen Fadenelemente (5) gemeinsam zu einem einzigen Stützfiltergewebe (40) verwirkt sind.

4. Arbeitsgerät nach Anspruch 2 oder 3,
**dadurch gekennzeichnet, dass** sich das Filtergewebe (30) im Betrieb des Filterbauteils (1), insbesondere unmittelbar, an dem Stützgewebe (20) abstützt

5. Arbeitsgerät nach einem der Ansprüche 2 bis 4,
**dadurch gekennzeichnet, dass** das Filtergewebe (30) so im Arbeitsgerät (2) angeordnet ist, dass es einen Teil der Außenseite (3) des Arbeitsgeräts (2) bildet und dass das Stützgewebe (20) einem Innenbereich (6) des Arbeitsgeräts (2) zugewandt ist.

6. Arbeitsgerät nach einem der Ansprüche 2 bis 5,
**dadurch gekennzeichnet, dass** das Filterbauteil ein weiteres Stützgewebe (60) umfasst, und dass das Filtergewebe (30) zwischen dem Stützgewebe (20) und dem weiteren Stützgewebe (60) angeordnet ist.

7. Arbeitsgerät nach einem der Ansprüche 2 bis 6,
**dadurch gekennzeichnet, dass** eine Stützmaschenweite (a1) des Stützgewebes (20) größer als eine Filtermaschenweite (a2) des Filtergewebes (30) ist.

8. Arbeitsgerät nach einem der Ansprüche 1 bis 7,
**dadurch gekennzeichnet, dass** die dicken Fadenelemente (4) und/oder die dünnen Fadenelemente (5) aus Metall, insbesondere aus nichtrostendem Metall, insbesondere aus Edelstahl, sind.

9. Filterbauteil zur Filterung von Kühlluft für ein handgeführtes Arbeitsgerät (2), wobei das Filterbauteil (1) einen Rahmen (7) und ein Gewebe (70) umfasst, wobei das Filterbauteil (1) zur Durchströmung mit Kühlluft in einer Durchströmungsrichtung (50) vorgesehen ist, wobei der Rahmen (7) das Gewebe (70) bezüglich der Durchströmungsrichtung (50) von beiden Seiten her einfasst und um die Durchströmungsrichtung (50) geschlossen umläuft, wobei das Gewebe (70) eine das Gewebe (70) in Durchströmungsrichtung (50) vollständig durchdringende Durchgangsöffnung (74) zur Durchführung eines Stifts (73) während der Herstellung des Filtebauteils (1) besitzt,
**dadurch gekennzeichnet, dass** das Filterbauteil (1) eine Blockierung umfasst, und dass eine Durchströmung des Filterbauteils (1) mit Kühlluft in Durchströmungsrichtung (50) im Bereich der Durchgangsöffnung (74) durch die Blockierung verhindert ist.

10. Filterbauteil nach Anspruch 9,
**dadurch gekennzeichnet, dass** die Durchgangsöffnung (74) von Material des Rahmens (7) umgeben ist und/oder dass die Durchgangsöffnung (74) mit einem Verschlusselement (76) aus Elastomer verschlossen ist.

11. Filterbauteil zur Filterung von Kühlluft für ein handgeführtes Arbeitsgerät (2), wobei das Filterbauteil (1) dazu vorgesehen ist, einen Teil einer Außenseite (3) des Arbeitsgeräts (2) zu bilden und an einem Grundkörper (11) des Arbeitsgeräts (2) angebracht zu werden, wobei das Filterbauteil (1) ein Peilelement (110) zur Ausrichtung des Arbeitsgeräts (2) umfasst,
**dadurch gekennzeichnet, dass** das Filterbauteil (1) ein Dichtelement (77) zur Anlage an dem Grundkörper (11) des handgeführten Arbeitsgeräts (2) und zur Abdichtung zwischen dem Filterbauteil (1) und dem Grundkörper (11) aufweist, und dass das Peilelement (110) und das Dichtelement (77) materialeinheitlich ausgebildet sind.

12. Filterbauteil nach Anspruch 11,
**dadurch gekennzeichnet, dass** das Peilelement (110) und das Dichtelement (77) miteinander monolithisch als Peil- und Dichtelement (111) ausgebildet sind.

13. Filterbauteil nach Anspruch 11 oder 12,
**dadurch gekennzeichnet, dass** sowohl das Peilelement (110) als auch das Dichtelement (77) aus einem thermoplastischen Elastomer sind.

14. Filterbauteil nach einem der Ansprüche 11 bis 13,
**dadurch gekennzeichnet, dass** das Filterbauteil (1) eine in Einbaulage des Filterbauteils (1) dem Grundkörper (11) zugewandte Innenseite (14) und eine in Einbaulage des Filterbauteils (1) dem Grundkörper (11) abgewandte Außenseite (15) aufweist, dass das Filterbauteil (1) mindestens eine Durchflussöffnung (16) aufweist, dass die mindestens eine Durchflussöffnung (16) das Filterbauteil von der Innenseite (14) bis zur Außenseite (15) vollständig durchdringt, und dass sich das Peil- und Dichtelement (111) durch die mindestens eine Durchflussöffnung (16) hindurch erstreckt.

15. Handgeführtes Arbeitsgerät mit einem Filterbauteil nach einem der Ansprüche 11 bis 14,
**dadurch gekennzeichnet, dass** das Arbeitsgerät (2) ein Werkzeug (10) umfasst, dass das Werkzeug (10) eine Längserstreckung besitzt, dass das Peilelement (110) eine Stechleiste (112) und/oder eine Fällleiste (113) aufweist, und dass sich die Stechleiste (112) in Einbaulage im Wesentlichen in Richtung der Längserstreckung erstreckt und/oder dass sich die Fällleiste (113) in Richtung quer zur Richtung der Längserstreckung erstreckt.
